# EUROPÄISCHE PATENTSCHRIFT

(11) **EP 2 801 338 B1**
(45) Veröffentlichungstag und Bekanntmachung des Hinweises auf die Patenterteilung: **02.01.2019**
(21) Anmeldenummer: 14001568.6
(22) Anmeldetag: 05.05.2014
(51) Int. Cl.: A61C 17/22

(54) **Elektrische Zahnbürste mit Zubehöreinrichtungen**
Electric toothbrush with accessory devices
Brosse à dents électrique dotée de dispositifs accessoires

(30) Priorität: 06.05.2013 DE 102013007758
(43) Veröffentlichungstag der Anmeldung: 12.11.2014
(73) Patentinhaber: Olpp, Dieter, 81829 München (DE)
(72) Erfinder: Olpp, Dieter, 81829 München (DE)

(56) Entgegenhaltungen:
- EP-A2- 0 634 151
- WO-A1-2012/085819
- DE-A1- 4 334 293
- DE-A1-102007 053 985

## Beschreibung

Die vorliegende Erfindung betrifft eine Kombination einer elektrischen Zahnbürste mit einer oder mehreren Zubehöreinrichtungen, gemäß Anspruch 1.

Eine elektrische Zahnbürste (im Folgenden teilweise auch nur als "Zahnbürste" bezeichnet) der vorliegend betrachteten Art weist ein Handstück auf, das während der Benutzung mit der Hand ergriffen wird und mit dem die Zahnbürste geführt wird. Die Zahnbürste kann weiterhin eine abnehmbare Aufsteckbürste aufweisen, auf welcher die Borsten angeordnet sind. Die Aufsteckbürste wird durch eine lösbare Verbindung, im Allgemeinen eine reibschlüssige oder formschlüssige, insbesondere einrastende, Steckverbindung, mit dem Handstück verbunden und kann nach einer bestimmten Benutzungsdauer - beispielsweise alle drei Monate oder auch abhängig vom Grad ihrer Abnutzung - auf einfache Weise ausgetauscht werden. Weiterhin kann zur Benutzung mit der elektrischen Zahnbürste eine Ladestation vorgesehen sein, an die die Zahnbürste gekoppelt wird und über die ein in der Zahnbürste vorhandener Akku, welcher zur Stromversorgung der Zahnbürste dient, aufgeladen werden kann. Die Aufladung erfolgt dabei im Allgemeinen induktiv, z.B. DE102007053985.

Mit der zunehmenden Verbreitung von elektrischen Zahnbürsten hat auch deren technische Komplexität und die Anzahl von deren Funktionen in den letzten Jahren stark zugenommen. So verfügen moderne elektrische Zahnbürsten nicht mehr nur über einen einzigen Betriebsmodus, welcher über einen einfachen Ein-/Aus-Schalter gesteuert wird, sondern der Benutzer kann zwischen einer Vielzahl von Programmen wählen - neben einem Standardprogramm beispielsweise einem Programm für empfindliche Zähne, einem zur Zahnfleischpflege und einem zur Zahnaufhellung -, wobei die Programmauswahl über ein oder mehrere Bedienelemente an der Zahnbürste gesteuert wird. Weiterhin kann die Zahnbürste beispielsweise einen Drucksensor für die Stärke des beim Putzen auf die Zähne ausgeübten Andrucks aufweisen oder einen Timer zur Überwachung der empfohlenen Putzdauer, sei es insgesamt oder für jeden Quadranten des Gebisses einzeln. Außerdem kann die Zahnbürste den Ladezustand ihres Akkus überwachen. Schließlich kann auch die Aufsteckbürste Mittel aufweisen, über die das Handstück die Aufsteckbürste, insbesondere drahtlos, erkennen und somit etwa die Nutzungsdauer der Aufsteckbürste feststellen kann, beispielsweise ein RFID-Tag.

Aus den zahlreichen Funktionen der elektrischen Zahnbürste resultiert eine Fülle von Informationen, die dem Benutzer vor, während oder nach dem Zähneputzen mitgeteilt werden sollen. Entsprechend den oben aufgeführten Funktionen sind dies beispielsweise das aktuell gewählte Programm, die momentane Andruckstärke, die aktuelle Zahnputzdauer, der Ladezustand des Akkus oder der empfohlene Zeitpunkt einer Auswechselung der Aufsteckbürste.

Hierbei ergibt sich das Problem, dass die elektrische Zahnbürste durch ihre im Allgemeinen schmale Form eine zu geringe Oberfläche für größere optische Anzeigeelemente bietet. Hinzu kommt, dass sich zumindest die mit dem Handstück verbundene Aufsteckbürste während der Benutzung zwangsläufig im Mund des Benutzers befindet, wodurch auch das Handstück und etwaige optische Anzeigen auf dessen Oberfläche sich weitgehend außerhalb des Sichtbereichs des Benutzers befinden.

Daher kann beispielsweise die Auswahl des Putzprogramms nur schwer über eine optische Anzeige auf dem Handstück kontrolliert werden, wenn sich die Zahnbürste während der Benutzung im Mund des Benutzers befindet, oder die Kontrolle muss umständlich über das Spiegelbild der Zahnbürste im Badezimmerspiegel vorgenommen werden.

Für bestimmte Informationen finden auch nicht-optische Darstellungsformen Verwendung. So wird beispielsweise der Ablauf der empfohlenen Putzzeit insgesamt oder quadrantenweise dem Benutzer oftmals durch eine kurze Unterbrechung ("Stottern") des Zahnbürstenantriebs signalisiert. Auf diese Weise lässt sich jedoch nur eine sehr geringe Informationsdichte erreichen. Beispielsweise lässt sich eine ständige Information des Benutzers über die genaue Restzeit bis zur empfohlenen Putzdauer dadurch nicht erreichen.

Die WO 2008/060482 A2 schlägt zur Lösung dieses Problems ein von der Zahnbürste separates Display vor, beispielsweise in Form eines LCD (Flüssigkristallanzeige), wobei eine Datenübertragungsverbindung zwischen der Zahnbürste und dem Display besteht. Das Display ist als eigenständiges Gerät ausgebildet und kann beispielsweise an einem Spiegel, auf einer Arbeitsfläche oder Konsole oder an einem Badschränkchen befestigt werden.

Der vorliegenden Erfindung liegt die Aufgabe zu Grunde, eine verbesserte Anordnung mit einer elektrischen Zahnbürste und einer Anzeigeeinrichtung zu schaffen.

Diese Aufgabe wird gelöst durch den unabhängigen Anspruch 1. Weitere vorteilhafte Ausgestaltungen der Erfindung sind in den Unteransprüchen enthalten.

Die Erfindung sieht eine Kombination einer elektrischen Zahnbürste mit einer oder mehreren Zubehöreinrichtungen vor, wobei die eine oder eine der Zubehöreinrichtungen ein Zahnputzglas ist, das Zahnputzglas wenigstens eine Anzeigeeinrichtung aufweist und die Anzeigeeinrichtung zur Anzeige wenigstens einer Information eingerichtet ist, die sich auf die Zahnbürste bezieht, wobei die wenigstens eine Information eine Information über den Zustand der Zahnbürste oder eine Information über den aktuellen Putzvorgang ist.

Unter einem Zahnputzglas wird dabei ein becherförmiger Behälter verstanden, der insbesondere zum Ausspülen des Mundes nach dem Zähneputzen verwendet wird. Ein Zahnputzglas ist vorzugsweise aus Glas, Kunststoff oder Metall gefertigt, kann aber auch aus anderen Materialien gefertigt sein.

Vorzugsweise ist das Zahnputzglas ganz oder teilweise transparent. Insbesondere bietet sich als Werkstoff für das Zahnputzglas ein sehr schlag- und bruchfester und gleichzeitig sehr transparenter Kunststoff wie Polycarbonat an. Eine Ausführung des Zahnputzglases aus einem sehr stabilen Werkstoff erhöht auch die Attraktivität für den Benutzer, da dieser nicht befürchten muss, dass das mit der Anzeigeeinrichtung versehene und daher möglicherweise recht teure Zahnputzglas zerstört wird, wenn es beispielsweise auf ein Waschbecken oder auf einen Fliesenboden fällt, was bei einer Ausführung aus Glas oder aus einem spröden Kunststoff sehr wahrscheinlich wäre.

Außerdem ist es bevorzugt, dass das Zahnputzglas eine Schmutz abweisende Oberfläche oder eine entsprechende Beschichtung aufweist, beispielsweise durch einen sogenannten "Selbstreinigungseffekt" oder "Lotus-Effekt", damit die Erkennbarkeit der Anzeigeeinrichtung nicht durch die bei der Benutzung des Zahnputzglases entstehenden Ablagerungen wie Wasser- oder Kalkflecken oder Zahnpastareste beeinträchtigt wird.

Besonders bevorzugt ist es, die Anzeigeeinrichtung in das Material des Zahnputzglases einzugießen, um sie wasser- und luftdicht einzuschließen und vor mechanischen Beanspruchungen zu schützen. Bevorzugt sind das Zahnputzglas und die Anzeigeeinrichtung auch hitzebeständig. Dadurch wird ermöglicht, dass das Zahnputzglas mit der Anzeigeeinrichtung beispielsweise in der Spülmaschine gereinigt werden kann.

Eine Anzeigeeinrichtung im Sinne der vorliegenden Erfindung ist eine Einrichtung zur visuellen Anzeige von Informationen und/oder von sonstigen visuellen Darstellungen. Unter sonstigen visuellen Darstellungen werden auch solche visuellen Darstellungen verstanden, die ausschließlich oder überwiegend Beleuchtungszwecken dienen.

Die Anzeigeeinrichtung kann aus einem einzelnen oder aus mehreren, voneinander getrennten Elementen, beispielsweise aus einem oder mehreren leuchtenden Punkten oder Flächen, bestehen. Vorzugsweise besteht die Anzeigeeinrichtung jedoch aus einer durchgehenden Fläche, welche üblicherweise als Bildschirm oder Display bezeichnet wird. Diese Fläche kann wiederum einzelne, diskrete Anzeigeelemente wie Symbole, insbesondere Ziffern, Buchstaben oder sonstige Zeichen, oder aus mehreren Unterelementen wie Strichen zusammengesetzte Symbole aufweisen ("Segment-Anzeige", für Ziffern insbesondere "7-Segment-Anzeige"). Die Fläche kann aber auch durchgehend mit Anzeigeelementen bedeckt sein, beispielsweise in Form einer Matrix aus einzelnen Pixeln.

Es sind sowohl selbst leuchtende, beispielsweise aus herkömmlichen, anorganischen Leuchtdioden (LED) oder aus organischen Leuchtdioden (OLED) bestehende Anzeigeeinrichtungen, als auch nicht selbst leuchtende Anzeigeeinrichtungen, beispielsweise Flüssigkristallanzeigen (LCD), denkbar. Beispielsweise durch den Einsatz von OLEDs sind insbesondere auch gekrümmte Anzeigeeinrichtungen möglich. Weiterhin sind sowohl monochromatische als auch mehrfarbige Anzeigeeinrichtungen denkbar, wobei bei letzteren die Farbpixel beispielsweise in üblicher Weise aus je drei Subpixeln verschiedener Farben gebildet werden.

Da in der Benutzungsumgebung einer - elektrischen wie auch manuellen - Zahnbürste ein Zahnputzglas im Allgemeinen ohnehin vorhanden ist, muss auf diese Weise keine zusätzliche Zubehöreinrichtung, wie etwa ein separates Display, vorgesehen werden. Dies ist sowohl aus ästhetischen Gründen wünschenswert als auch aus hygienischen, da auf diese Weise kein weiterer Gegenstand im Badezimmer hinzukommt, der selbst gereinigt werden muss und/oder vor der Reinigung desjenigen Gegenstands, an dem das Display befestigt ist - beispielsweise des Badezimmerspiegels -, erst entfernt werden muss. Schließlich lässt sich die Anzeigeeinrichtung bei einer Integration in das Zahnputzglas so gestalten, dass sie bei Nichtbenutzung nahezu oder auch völlig unsichtbar ist.

Weiterhin ist ein Zahnputzglas als Träger für eine Anzeigeeinrichtung vorteilhaft, da es im Vergleich zu einer Zahnbürste eine relativ große Fläche bietet, welche als Anzeigefläche verwendet werden kann. Die üblichen Formen von Zahnputzgläsern als zylindrische, konische oder prismatische Körper, welche gleichmäßig oder verschieden stark gekrümmte, stückweise ebene, im Wesentlichen ebene oder ebene Seitenflächen aufweisen, bieten hierbei vielfältige Gestaltungsmöglichkeiten für die Anordnung der Anzeigeeinrichtung.

Da sich das Zahnputzglas bei der Benutzung der Zahnbürste im Allgemeinen ohnehin in Griffweite und auch in Sichtweite des Benutzers befindet, insbesondere direkt vor dem Benutzer auf dem Waschtisch, auf einer Konsole oder in ähnlicher Weise platziert ist, ist eine gute Sichtbarkeit des Zahnputzglases und der darauf angezeigten Informationen oder Darstellungen vor, während und nach dem Zähneputzen gegeben.

Informationen und Darstellungen, die im Rahmen der Erfindung auf der Anzeigeeinrichtung angezeigt werden, können, jedoch nicht ausschließlich, Informationen aus der folgenden Liste sein:
- Datum und Uhrzeit
- ein persönlicher, vorzugsweise zeitabhängiger Begrüßungstext, beispielsweise "Guten Morgen, Lisa!"
- aktuelle Informationen, beispielsweise Nachrichten oder Wetterbericht
- Informationen zur Unterhaltung, beispielsweise dekorative Bilder, Fotos oder Filme
- Lichteffekte, beispielsweise sich bewegende Muster, bei entsprechender Gestaltung der Anzeigeeinrichtung insbesondere auch umlaufende Effekte
- beleuchtete Flächen verschiedener Größe, Helligkeit und Farbe, vorzugsweise zur Verwendung als Badezimmerbeleuchtung oder als Nachtlicht

Insbesondere können im Rahmen der Erfindung auf der Anzeigeeinrichtung Informationen angezeigt werden, die sich auf die Zahnbürste beziehen. Dies können, jedoch nicht ausschließlich, Informationen aus der folgenden Liste sein:
- Allgemeine Informationen über die Zahnbürste:
   - Produktinformationen über die Zahnbürste, beispielsweise der Name und/oder das Logo des Herstellers und/oder des Zahnbürstenmodells
      - die Bedienungsanleitung der Zahnbürste

Erfindungsgemäß ist die Anzeigeeinrichtung jedoch zur Anzeige wenigstens einer Information eingerichtet, die sich auf die Zahnbürste bezieht, wobei die wenigstens eine Information eine Information über den Zustand der Zahnbürste oder eine Information über den aktuellen Putzvorgang ist. Dies können, jedoch nicht ausschließlich, Informationen aus der folgenden Liste sein:
- Informationen über den Zustand der Zahnbürste:
   - der Akkuladezustand, beispielsweise als Prozentangabe, als Symbol in Form eines Balkens mit einzelnen Segmenten oder als "Ampeldarstellung" mit den Farben grün (voll geladen), gelb (teilweise geladen) und rot (fast leer)
   - Name des Besitzers der momentan auf die Zahnbürste aufgesteckten Aufsteckbürste, falls die Zahnbürste von mehreren Benutzern verwendet wird
   - seit dem letzten Austausch der Aufsteckbürste vergangene Zeit in Monaten, Wochen oder Tagen oder die Benutzungszeit der Aufsteckbürste in Stunden oder Minuten, ggf. auch für mehrere Aufsteckbürsten getrennt, mit einem Hinweis auf den empfohlenen nächsten Austausch
- Informationen über den aktuellen Putzvorgang:
   - abgelaufene Putzzeit, vorzugsweise mit Hinweis auf das Ende der empfohlenen Putzzeit (beispielsweise zwei Minuten), auch getrennt für die vier Quadranten des Gebisses (beispielsweise jeweils 30 Sekunden)
   - momentan zu putzender Quadrant, vorzugsweise auch mit einer grafischen Darstellung der vier Quadranten, insbesondere mit einer "realistischen" dreidimensionalen Darstellung auf der gewölbten Außenseite des Zahnputzglases, und Hervorhebung des momentan zu putzenden Quadranten
   - gewähltes Putzprogramm, beispielsweise "Normal", "Für empfindliche Zähne", "Polieren", "Aufhellen" und dergleichen
   - momentane Andruckstärke der Zahnbürste und Warnsignal bei Überschreitung einer maximal empfohlenen Andruckstärke

Die Anzeige aller oder einiger derartiger, auf die Zahnbürste bezogener Informationen auf der Anzeigeeinrichtung erhöht den Komfort des Benutzers erheblich. Beispielsweise löst die Anzeige des aktuell gewählten Putzprogramms auf der Anzeigeeinrichtung das Problem, dass der Benutzer eine Anzeige für das Putzprogramm am Handstück der Zahnbürste nicht sehen kann, während sich die Zahnbürste in seinem Mund befindet.

In einer besonders bevorzugten Ausführung der Erfindung ist die Anzeigeeinrichtung in eine Seitenwand und/oder in den Boden des Zahnputzglases integriert. Dadurch lässt sich eine relativ große Fläche für die Anzeigeeinrichtung nutzen.

Im Falle einer Integration der Anzeigeeinrichtung in eine Seitenwand sind die auf der Anzeigeeinrichtung dargestellten Informationen senkrecht oder nahezu senkrecht ausgerichtet und insbesondere bei einem gegenüber der Horizontalen flachen Betrachtungswinkel gut ablesbar. Im Falle einer Integration der Anzeigeeinrichtung in den Boden sind die auf der Anzeigeeinrichtung dargestellten Informationen waagrecht oder nahezu waagrecht angeordnet und insbesondere bei einem gegenüber der Horizontalen steilen Betrachtungswinkel gut ablesbar.

Je nach der zu erwartenden Blickrichtung des Benutzers ergibt sich also durch Auswahl einer dieser beiden Alternativen eine besonders gute Ablesbarkeit durch den Benutzer. Selbstverständlich kann auch wenigstens ein Teil der Anzeigeeinrichtung in einer Seitenwand und wenigstens ein Teil im Boden des Zahnputzglases integriert sein.

In einer weiteren besonders bevorzugten Ausführung der Erfindung ist die Anzeigeeinrichtung in einer, insbesondere im Wesentlichen zylindrischen oder kegelstumpfförmigen, Seitenwand des Zahnputzglases vollständig oder teilweise umlaufend angeordnet.

Unter "umlaufend" wird dabei eine Umschlingung des Zahnputzglases in wenigstens einer parallel zu dessen Boden verlaufenden Ebene verstanden. Eine vollständig umlaufende Anzeigeeinrichtung schließt sich daher auf dem Umfang des Zahnputzglases und hat somit eine Schlauch- oder Rohrform, welche entsprechend der Seitenwand des Zahnputzglases beispielsweise zylindrisch oder kegelstumpfförmig sein kann.

Eine umlaufende Anzeigeeinrichtung hat damit keine ebene Form, wie bei herkömmlichen Displays üblich, sondern vorzugsweise eine gekrümmte Form und/oder eine Form mit wenigstens einem Knick.

Die umlaufende Anzeigeeinrichtung ist dabei vorzugsweise so gefertigt, dass der Betrachter eine etwaige, bei ihrer Herstellung aus einer ebenen, blattförmigen Anzeigeeinrichtung entstehende Stoßstelle kaum oder gar nicht wahrnimmt, so dass Informationen wie Schrift oder Grafiken auch über diese Stoßstelle hinweg dargestellt werden können und somit in Umfangsrichtung stufenlos und ohne Unterbrechung verschiebbar sind. Hierdurch werden auch besondere visuelle Effekte wie eine rotierende oder eine sich spiralförmig bewegende Schrift möglich.

Die Anzeigeeinrichtung kann aber auch nicht-umlaufend, insbesondere nur auf einem Teil der Seitenfläche des Zahnputzglases, angeordnet sein. Dies bietet sich vorzugsweise dann an, wenn das Zahnputzglas die Form eines Prismas oder eines Pyramidenstumpfes mit einem im Wesentlichen n-eckigen Querschnitt und mit *n* im Wesentlichen ebenen Seitenflächen hat, wobei n beispielsweise 4, 5 oder 6 beträgt. Auch die Anzeigeeinrichtung kann dann n separate Teilflächen aufweisen, die jeweils auf einer der n Seitenflächen des Zahnputzglases angeordnet sind.

Die Anzeigeeinrichtung kann in diesem Fall aber auch nur auf einer oder mehreren, jedoch nicht auf allen n Seitenflächen des Zahnputzglases angeordnet sein. Bei einem Zahnputzglas mit einem im Wesentlichen viereckigen Querschnitt kann es beispielsweise ausreichen, die Anzeigeeinrichtung nur auf einer der vier Seitenflächen anzuordnen, wobei das Zahnputzglas dann so platziert sein muss, dass der Benutzer die Seitenfläche mit der Anzeigeeinrichtung gut erkennen kann.

In einer weiteren besonders bevorzugten Ausführung der Erfindung sind die auf der Anzeigeeinrichtung dargestellten Informationen auf der Außenseite und/oder auf der Innenseite des Zahnputzglases seitenrichtig zu erkennen.

Vorzugsweise ist das Zahnputzglas ganz oder teilweise transparent und weist eine Anzeigeeinrichtung auf, die sowohl von seiner Innenseite als auch von seiner Außenseite aus zu erkennen ist. Dann können die Informationen auf der Anzeigeeinrichtung in einer der beiden Alternativen einfach spiegelbildlich dargestellt werden, um eine seitenrichtige Erkennbarkeit von der betreffenden Seite aus (Innen- bzw. Außenseite des Zahnputzglases) zu erreichen.

Alternativ weist das Zahnputzglas vorzugsweise zwei Anzeigeeinrichtungen auf, von denen eine von der Innenseite und eine von der Außenseite aus zu erkennen ist. Zwischen den beiden Anzeigeeinrichtungen ist dann vorzugsweise eine intransparente Schicht oder das intransparente Material des Zahnputzglases angeordnet, um ein Durchscheinen der auf einer der Anzeigeeinrichtungen dargestellten Informationen auf die jeweils andere Seite des Zahnputzglases und damit eine unerwünschte Überlagerung der auf den beiden Anzeigeeinrichtungen dargestellten Informationen zu vermeiden. In diesem Fall können wahlweise auf nur einer Anzeigeeinrichtung oder auf beiden Anzeigeeinrichtungen gleichzeitig Informationen dargestellt werden, die jeweils seitenrichtig zu erkennen sind.

Weiter alternativ weist das Zahnputzglas vorzugsweise eine Anzeigeeinrichtung auf, die nur von der Innenseite oder nur von der Außenseite aus zu erkennen ist. In diesem Fall ist bereits durch die Herstellung des Zahnputzglases festgelegt, von welcher Seite aus die auf der Anzeigeeinrichtung dargestellten Informationen seitenrichtig zu erkennen sind.

Sowohl eine seitenrichtige Darstellung von Informationen auf der Innenseite als auch auf der Außenseite des Zahnputzglases kann vorteilhaft sein, je nachdem, in welcher Position das Zahnputzglas während der Darstellung der Informationen relativ zum Benutzer platziert ist und von welchem Blickwinkel aus der Benutzer die Anzeigeeinrichtung dementsprechend betrachtet. Ist der Blickwinkel gegenüber der Horizontalen relativ flach, so ist die vordere Außenseite des Zahnputzglases besonders gut zu sehen. Ist dagegen der Blickwinkel gegenüber der Horizontalen relativ steil, so ist die hintere Innenseite des Zahnputzglases besonders gut zu sehen. Dies gilt für ein Zahnputzglas mit senkrechten Wänden, insbesondere aber auch für ein Zahnputzglas mit nach oben hin nach außen geneigten Wänden, da in diesem Fall die Winkel zwischen der Blickrichtung und der vorderen bzw. der hinteren Wand des Zahnputzglases unterschiedlich sind. Durch eine wahlweise Darstellung von Informationen auf der (vorderen) Außenseite und der (hinteren) Innenseite des Zahnputzglases - wobei diese Wahl entweder bereits beim Design oder später noch während der Benutzung des Zahnputzglases getroffen werden kann -, hat der Hersteller bzw. der Benutzer die Möglichkeit, die Darstellung der Informationen der erwarteten bzw. der tatsächlichen Platzierung des Zahnputzglases während der Darstellung der Informationen, im Allgemeinen im Badezimmer, anzupassen.

Vorzugsweise können die auf der Anzeigeeinrichtung dargestellten Informationen auch skaliert, insbesondere vertikal und/oder horizontal gestreckt oder gestaucht, und/oder entzerrt werden. Durch eine Skalierung kann erreicht werden, dass der Benutzer bei einem erwarteten nicht senkrechten Blickwinkel auf das Zahnputzglas, beispielsweise von schräg oben, die Informationen wieder annähernd mit den richtigen Proportionen wahrnimmt. Durch eine Entzerrung können Krümmungen, insbesondere auch unterschiedliche Krümmungen, in der Oberfläche des Zahnputzglases für die Wahrnehmung der Informationen durch den Benutzer zumindest teilweise wieder ausgeglichen werden.

In einer besonders bevorzugten Ausführung der Erfindung gehören zu den Zubehöreinrichtungen ein Zahnputzglas und eine Ladestation, wobei die Zahnbürste durch die Ladestation aufladbar ist und die Zahnbürste sich während des Aufladevorgangs in dem Zahnputzglas befindet. Die Aufladung erfolgt dabei im Allgemeinen durch induktive Energieübertragung von wenigstens einer in der Ladestation angeordneten Primärspule zu wenigstens einer in der elektrischen Zahnbürste angeordneten Sekundärspule, wobei die Energieübertragung vorzugsweise durch das Zahnputzglas hindurch erfolgt. Dabei ist das Zahnputzglas vorzugsweise aus einem nicht-magnetischen und nicht elektrisch leitenden Werkstoff wie Glas oder Kunststoff gefertigt.

Eine Kombination aus einer elektrischen Zahnbürste, einer zugehörigen Ladestation und einem Zahnputzglas, wobei die Zahnbürste durch die Ladestation aufladbar ist und die Zahnbürste sich während des Aufladevorgangs in dem Zahnputzglas befindet, ist insbesondere aus der DE 296 18 742 U1, der DE 10 2007 053 985 A1 und der WO 2012/085819 A1 bekannt und auch als Produkt auf dem Markt erhältlich.

Die erfindungsgemäß vorgeschlagene zusätzliche Ausstattung des Zahnputzglases mit einer Anzeigeeinrichtung führt zu einer kompakten und eleganten Integration der Funktionen "Aufbewahrung der elektrischen Zahnbürste", "Aufladung der elektrischen Zahnbürste" und "Anzeige von Informationen und sonstigen visuellen Darstellungen".

Besonders bevorzugt ist eine Variante dieser Ausführung, wobei die Anzeigeeinrichtung Energie für ihren Betrieb von der Ladestation bezieht. Dadurch braucht die Anzeigeeinrichtung über keine eigene Energieversorgung zu verfügen, insbesondere über keine eigene Stromversorgung, im Gegensatz zu einem herkömmlichen separaten Display, welches eine eigene Stromversorgung, beispielsweise in Form einer aufladbaren oder nichtaufladbaren Batterie oder eines Netzanschlusses, aufweist. Letzteres führt zu einem erhöhten Wartungsaufwand für den Benutzer, welcher die Batterie regelmäßig aufladen bzw. austauschen muss, oder zu einem weiteren Kabel zum Anschluss an eine Steckdose.

Die in der vorliegenden Variante vorgeschlagene Kombination wirkt daher auch nicht - wieder im Gegensatz zu einem separaten Display oder auch zu einer separaten Ladestation für die elektrische Zahnbürste - wie ein "Fremdkörper" im Badezimmer, den es aus ästhetischen und/oder hygienischen Gründen bzw. wegen der notwendigen Wartung möglichst zu vermeiden gilt.

Falls die Energieübertragung zwischen der elektrischen Zahnbürste und der Ladestation, wie oben beschrieben, induktiv erfolgt, weist das Zahnputzglas in dieser Variante vorzugsweise eine weitere Sekundärspule auf, über welche aus dem ohnehin vorhandenen, von der Ladestation erzeugten Magnetfeld induktiv Energie auf das Zahnputzglas übertragen wird. Diese Sekundärspule ist vorzugsweise im Boden oder in der Seitenwand des Zahnputzglases angeordnet, wobei eine Mittelachse der Sekundärspule vorzugsweise mit einer Mittelachse des Zahnputzglases im Wesentlichen zusammenfällt, und hat vorzugsweise annähernd denselben Durchmesser wie das Zahnputzglas selbst.

Die Umwandlung der auf das Zahnputzglas induktiv übertragenen Energie in eine geeignete Spannung, insbesondere eine Gleichspannung, zur Versorgung der Anzeigeeinrichtung erfolgt ähnlich wie von einer elektrischen Zahnbürste her bekannt, beispielsweise durch Gleichrichtung und Glättung einer von der Sekundärspule erzeugten hochfrequenten Wechselspannung.

Hierdurch lässt sich auf einfache Weise eine Stromversorgung für die Anzeigeeinrichtung in dem Zahnputzglas realisieren, die insbesondere ohne bewegliche oder austauschbare Komponenten, beispielsweise eine Batterie, auskommt. Die Sekundärspule und die notwendige Elektronik können - wie die Anzeigeeinrichtung selbst auch - in das Material des Zahnputzglases eingegossen werden und sind somit wasser- und luftdicht und wartungsfrei im Zahnputzglas eingeschlossen.

In einer weiteren bevorzugten Ausführung der Erfindung ist das Zahnputzglas mit der Ladestation lösbar verbindbar und das Zahnputzglas im mit der Ladestation verbundenen Zustand relativ zur Ladestation bewegbar, insbesondere drehbar. Ferner weisen das Zahnputzglas und/oder die Ladestation Erkennungsmittel, insbesondere wenigstens einen Sensor und/oder wenigstens ein Markierungselement, auf, die dazu eingerichtet sind, die Position und/oder die Orientierung des Zahnputzglases, insbesondere dessen Drehstellung, relativ zur Ladestation zu erkennen.

Vorzugsweise sind am oder im Zahnputzglas wenigstens ein Sensor und an oder in der Ladestation wenigstens ein Markierungselement angeordnet, wobei das Markierungselement vorzugsweise nahe dem Umfang der Ladestation umlaufend angebracht ist und wobei das Markierungselement von dem Sensor erkannt werden kann. Es können aber auch umgekehrt das Markierungselement am oder im Zahnputzglas und der Sensor an oder in der Ladestation angebracht sein.

Bei einer relativ zur Umgebung feststehenden Ladestation erkennt das Zahnputzglas durch die Erkennungsmittel somit seine Lage, insbesondere seine Drehstellung, gegenüber der Umgebung, sobald ihm eine Referenzposition bekannt ist. Insbesondere kann das Zahnputzglas auf diese Weise erkennen, ob die Anzeigeeinrichtung oder bestimmte Teile davon so ausgerichtet sind, dass der Benutzer sie erkennen kann.

Dies erleichtert die Benutzung des Zahnputzglases, insbesondere wenn dieses einen runden Querschnitt aufweist und wenn keine Mittel vorgesehen sind, um das Zahnputzglas in einer bestimmten Drehstellung auf die Ladestation zu platzieren: Durch die selbsttätige Erkennung der Drehstellung kann dann nämlich die Anzeigeeinrichtung so gesteuert werden, dass die angezeigten Informationen für den Benutzer gut erkennbar angeordnet sind, vorzugsweise etwa senkrecht zu der aufgrund der Platzierung des Zahnputzglases zu erwartenden Blickrichtung des Benutzers.

Falls die Anzeigeeinrichtung umlaufend angeordnet ist, insbesondere bei einem zylindrischen oder konischen Zahnputzglas, können die Informationen einfach in dem Bereich angezeigt werden, der dem Benutzer zugewandt ist, wobei dieser Bereich vorzugsweise stufenlos festgelegt werden kann.

Im Falle eines beispielsweise prismatischen Zahnputzglases, beispielsweise mit im Wesentlichen viereckigem Querschnitt und mit vier im Wesentlichen ebenen Seitenflächen, kann die Anzeigeeinrichtung dagegen vier separate Teilflächen, die jeweils auf einer Seitenfläche des Zahnputzglases angeordnet sind, aufweisen. In diesem Fall kann durch die selbsttätige Erkennung der Drehstellung des Zahnputzglases eine Teilfläche ausgewählt werden, auf der die darzustellenden Informationen für den Benutzer am besten sichtbar sind, vorzugsweise diejenige Teilfläche, die dem Benutzer am meisten zugewandt ist.

Weiterhin kann durch Auswertung der Erkennungsmittel festgestellt werden, ob das Zahnputzglas überhaupt mit der Ladestation verbunden ist.

Die technische Realisierung derartiger Erkennungsmittel kann auf verschiedene Weise erfolgen:
Vorzugsweise ist auf der Oberseite der Ladestation ein mechanisches Markierungselement vorgesehen, beispielsweise in Form einer umlaufenden Rille oder eines umlaufenden Steges, deren Tiefe bzw. dessen Höhe sich kontinuierlich oder stufenförmig ändert. Entsprechend ist an der Unterseite des Zahnputzglases ein Sensor in Form eines in Richtung der Ladestation federbelasteten Elementes angeordnet, beispielsweise einer Kugel, die in der Rille bzw. auf dem Steg auf der Ladestation entlanggleitet oder -rollt. Beim Aufsetzen des Zahnputzglases auf die Ladestation und beim Drehen des Zahnputzglases auf der Ladestation kann dann durch Messen der Auslenkung der Kugel die Drehstellung des Zahnputzglases auf der Ladestation ermittelt werden. Ferner kann erkannt werden, ob das Zahnputzglas überhaupt auf der Ladestation aufgesetzt ist, wenn die Kugel im abgenommenen Zustand des Zahnputzglases eine bestimmte eindeutige, beispielsweise maximale Auslenkung erfährt.

Eine entsprechende Anordnung lässt sich auch unter Verwendung anderer physikalischer Eigenschaften herstellen, beispielsweise
- magnetisch durch eine umlaufende permanentmagnetische Zone unter der Oberfläche der Ladestation, deren Magnetisierungsstärke sich kontinuierlich oder stufenförmig ändert, und einen Magnetsensor an der Unterseite des Zahnputzglases;
- kapazitiv durch eine umlaufende Elektrode unter der Oberfläche der Ladestation, deren Abstand zur Oberfläche sich kontinuierlich oder stufenförmig ändert, und eine punktförmige Gegenelektrode an der Unterseite des Zahnputzglases, wodurch sich je nach Abstand der Elektroden zueinander eine unterschiedliche Kapazität einstellt;
- optisch durch eine umlaufende optische Markierung auf der Oberfläche der Ladestation, bei der sich eine optische Eigenschaft wie Helligkeit oder Reflexivität kontinuierlich oder stufenförmig ändert, und einen Fotosensor auf der Unterseite des Zahnputzglases.

Es kann aber auch eine Vielzahl von Markierungselementen vorgesehen sein, beispielsweise in Form von zueinander beabstandeten Marken mit einer bestimmten physikalischen Eigenschaft, die umlaufend auf dem Zahnputzglas bzw. auf der Ladestation angebracht sind. Der Sensor erzeugt dann beim Überstreichen der Marken einzelne Impulse, welche gezählt werden und woraus der Drehwinkel des Zahnputzglases ermittelt werden kann.

In diesem Fall ist vorzugsweise ein bestimmtes Markierungselement als Referenzmarkierungselement ausgebildet, indem es an einer bestimmten Referenzposition angeordnet ist und eine andere Stärke der verwendeten physikalischen Eigenschaft als die übrigen Markierungselemente besitzt. Beim Überstreichen des Referenzmarkierungselementes erzeugt der Sensor dann einen Impuls einer anderen Stärke als bei den anderen Markierungselementen, woraus die Referenzposition erkannt werden kann.

In einer bevorzugten Variante dieser Ausführungsform können durch Veränderung der Position und/oder der Orientierung des Zahnputzglases relativ zur Ladestation und/oder durch das Herstellen und/oder durch das Lösen der Verbindung des Zahnputzglases mit der Ladestation Eingabewerte an die Anzeigeeinrichtung übermittelt werden. Vorzugsweise wird dabei durch Drehen des Zahnputzglases auf der Ladestation eine Auswahlfunktion gesteuert (entsprechend dem Verschieben eines Mauszeigers bei einem Computer oder dem Drehen eines Einstellrades an einem Gerät). Dies kann beispielsweise ein Cursor sein, der auf eine Reihe von Symbolen zeigt, oder eine Auswahl eines Eintrags in einem Menü, wobei die Auswahl des Symbols bzw. des Menüeintrags vorzugsweise durch kurzes Abheben und Wiederaufsetzen des Zahnputzglases von der bzw. auf die Ladestation bestätigt wird.

Alternativ kann für die Bestätigungsfunktion (entsprechend dem Klicken auf eine Maustaste oder dem Drücken der Eingabetaste bei einem Computer) auch ein weiteres Eingabeelement, beispielsweise ein Mikroschalter in oder unter der Oberfläche der Ladestation, vorgesehen sein, der vorzugsweise durch einen leichten Druck mit dem Zahnputzglas betätigt wird.

Auf diese Weise lässt sich eine einfache Eingabefunktion realisieren, mittels derer die Anzeigeeinrichtung konfiguriert werden kann, beispielsweise durch Eingabe des Datums und der Uhrzeit, eines anzuzeigenden Benutzernamens oder verschiedener Optionen wie des standardmäßig zu verwendenden Putzprogramms der elektrischen Zahnbürste.

In einer bevorzugten Variante dieser Ausführungsform enthalten die Eingabewerte Steuerbefehle zur Steuerung der Zahnbürste. Dadurch lässt sich vorzugsweise das Zahnputzglas mit der Anzeigeeinrichtung als eine Art "Fernbedienung" für die elektrische Zahnbürste verwenden. Gesteuert wird vorzugsweise das Ein- und Ausschalten der Zahnbürste, das Putzprogramm, die Geschwindigkeit oder die Intensität der Bewegungen der Zahnbürste. Die Steuerbefehle können für den Benutzer gut sichtbar und auf intuitive Weise auf der Anzeigeeinrichtung im Zahnputzglas grafisch dargestellt werden, beispielsweise durch Symbole zur Darstellung von Betriebszuständen der Zahnbürste oder durch Balken zur Darstellung von kontinuierlich veränderbaren Werten. Dadurch wird das Problem gelöst, dass die Betätigung von Bedienungselementen am Handstück der Zahnbürste schwierig und insbesondere eine optische Anzeige am Handstück kaum erkennbar ist, wenn sich die Zahnbürste im Mund des Benutzers befindet.

Vorzugsweise schaltet sich in dieser Variante die Zahnbürste durch das Lösen der Verbindung des Zahnputzglases mit der Ladestation automatisch aus. Dies erspart dem Benutzer das separate Ausschalten der Zahnbürste und erleichtert den Zahnputzablauf, wenn der Benutzer unmittelbar nach dem Beenden des Putzvorgangs seinen Mund ausspülen will, beispielsweise wenn er bereits vor Beginn des Putzvorgangs das Zahnputzglas mit Wasser gefüllt hat.

Vorzugsweise wird durch das Herstellen und/oder durch das Lösen der Verbindung des Zahnputzglases mit der Ladestation auch die Anzeigeeinrichtung ein- bzw. ausgeschaltet. Dieses Merkmal kann besonders einfach in Verbindung mit derjenigen Ausführung der Erfindung realisiert werden, in der die Anzeigeeinrichtung Energie für ihren Betrieb von der Ladestation bezieht, vorzugsweise durch induktive Energieübertragung von einer Primärspule in der Ladestation zu einer Sekundärspule im Zahnputzglas. Da die Anzeigeeinrichtung dann im von der Ladestation gelösten Zustand keine Energie mehr oder für ihren Betrieb zu wenig Energie von der Ladestation bezieht, schaltet sie sich in diesem Zustand von selbst ab oder wird von einer geeigneten elektronischen Energiedetektionsschaltung abgeschaltet. Da die Anzeigeeinrichtung umgekehrt im mit der Ladestation verbundenen Zustand für ihren Betrieb genügend Energie von der Ladestation bezieht, schaltet sie sich von selbst ein oder wird von der elektronischen Energiedetektionsschaltung eingeschaltet.

Vorzugsweise schaltet sich die Anzeigeeinrichtung beim Herausnehmen der Zahnbürste aus dem Zahnputzglas ein bzw. beim Hineinstellen der Zahnbürste in das Zahnputzglas aus. Dies kann technisch durch geeignete Detektionsmittel realisiert werden, welche erkennen, ob die Zahnbürste im Zahnputzglas eingestellt ist oder nicht, beispielsweise durch eine Messung der Belastung des von der Ladestation erzeugten Magnetfeldes durch die Sekundärspule der Zahnbürste.

Diese Ausführung hat den Vorteil, dass die Anzeigeeinrichtung ausgeschaltet ist, wenn die Zahnbürste im Zahnputzglas eingestellt ist und somit nicht benutzt wird. In diesem Zustand ist die Anzeigeeinrichtung außerdem möglicherweise zumindest teilweise von der Zahnbürste verdeckt und wäre daher sowieso nicht problemlos ablesbar. Weiterhin wird in diesem Zustand möglicherweise die von der Ladestation zur Verfügung gestellte Energie zum Aufladen der Zahnbürste gebraucht und reicht zum Betrieb der Anzeigeeinrichtung nicht mehr aus. Umgekehrt ist die Anzeigeeinrichtung in dieser Ausführung dann eingeschaltet, wenn die Zahnbürste nicht im Zahnputzglas eingestellt ist und somit wahrscheinlich gerade benutzt wird.

Alternativ kann bei ins Zahnputzglas eingestellter Zahnbürste, wodurch eine Nichtbenutzung der Zahnbürste erkannt wird, die Anzeigeeinrichtung in einen "Standby-Modus" gehen, in dem beispielsweise nur noch die Uhrzeit und/oder der Akkuladezustand angezeigt werden.

Vorzugsweise schaltet sich die Anzeigeeinrichtung zeitverzögert nach einer bestimmten Zeitspanne nach dem Einstellen der Zahnbürste in das Zahnputzglas oder auch nach einer bestimmten Zeit ohne Aktivität der Zahnbürste aus bzw. geht in den Standby-Modus.

In einer weiteren bevorzugten Ausführung der Erfindung sind die Anzeigeeinrichtung und die Zahnbürste für eine drahtlose Informationsübertragung von der Zahnbürste zur Anzeigeeinrichtung und/oder umgekehrt eingerichtet. Die Informationsübertragung erfolgt dabei vorzugsweise über eine standardisierte drahtlose Kommunikationstechnologie, beispielsweise eine Nahfeld-Kommunikationstechnologie wie RFID, eine Funktechnologie wie Bluetooth, ANT, Zigbee oder WLAN (insbesondere nach dem IEEE-802.11-Standard) oder eine Mobilfunktechnologie wie GSM, GPRS, UMTS oder LTE.

Denkbar ist weiterhin die Informationsübertragung von der Zahnbürste und/oder der Anzeigeeinrichtung zu und/oder von einer externen Kommunikationseinrichtung, vorzugsweise einem Mobiltelefon (insbesondere einem sogenannten Smartphone), einem Tablet- oder einem Notebook-Computer, welches bzw. welcher die ohnehin bereits verwendete Kommunikationstechnologie, beispielsweise WLAN oder Bluetooth, unterstützt. Vorzugsweise wird auf diese Weise die Bedienung, insbesondere die Konfiguration, der Anzeigeeinrichtung und/oder der Zahnbürste, über die externe Kommunikationseinrichtung vorgenommen. Dabei können die Eingabe- und Anzeigemöglichkeiten der externen Kommunikationseinrichtung, wie beispielsweise ein Bildschirm oder eine Tastatur, zur komfortablen Ein- und Ausgabe verwendet werden.

In dieser Ausführung sind sowohl die Anzeigeeinrichtung als auch die Zahnbürste zum Zweck der Informationsübertragung je nach der vorgesehenen Richtung oder den vorgesehenen Richtungen der Informationsübertragung mit jeweils wenigstens einem Sender und/oder wenigstens einem Empfänger für die jeweilige Kommunikationstechnologie ausgestattet oder mit einem solchen verbunden.

Der oder die Sender und/oder Empfänger für die Anzeigeeinrichtung sind vorzugsweise im Zahnputzglas angeordnet und können innerhalb des Zahnputzglases mit der Anzeigeeinrichtung verbunden sein.

Der oder die Sender und/oder Empfänger für die Zahnbürste sind vorzugsweise im Handstück und/oder in der Aufsteckbürste angeordnet.

Ein Sender im Handstück überträgt dabei vorzugsweise einzelne oder mehrere der oben genannten Informationen zum Zustand der Zahnbürste und/oder zum aktuellen Putzvorgang. Ein Empfänger im Handstück empfängt vorzugsweise die oben genannten Steuerbefehle für die Zahnbürste.

Ein Sender in der Aufsteckbürste überträgt vorzugsweise Identifikationsinformationen für die Aufsteckbürste, beispielsweise eine Identifikationsnummer oder den Namen des der Aufsteckbürste zugeordneten Benutzers, und zwar vorzugsweise zum Zeitpunkt des Aufsteckens der Aufsteckbürste auf das Handstück. Daraus kann beispielsweise unter Einbeziehung der Einschaltdauer der Zahnbürste errechnet werden, wie lange eine bestimmte Aufsteckbürste benutzt wurde. Es kann auch ermittelt werden, wie lange die Aufsteckbürste insgesamt in Gebrauch war (Zeitspanne seit ihrer ersten Benutzung). Diese Informationen und ein daraus ermittelter Hinweis, wann der Austausch der Aufsteckbürste eines bestimmten Benutzers empfohlen wird, können dann auf der Anzeigeeinrichtung angezeigt werden. Lediglich die Zuordnung einer neuen Aufsteckbürste zu einem Benutzer muss durch diesen, beispielsweise in Form der oben genannten Eingabewerte, der Anzeigeeinrichtung oder einer mit dieser verbundenen Informationsverarbeitungseinheit mitgeteilt werden.

Die Anzeige des Namens des Benutzers einer auf das Handstück aufgesteckten Aufsteckbürste auf der Anzeigeeinrichtung kann weiterhin der Gefahr vorbeugen, dass sich ein Benutzer mit der falschen Aufsteckbürste die Zähne putzt. Außerdem ist es möglich, die Benutzung der Zahnbürste durch einen oder mehrere Benutzer zu protokollieren. Hierdurch können beispielsweise Eltern kontrollieren, ob sich ihre Kinder regelmäßig und lange genug mit der Zahnbürste die Zähne geputzt haben.

Auch zwischen den Sendern/Empfängern, die zur Zahnbürste gehören, vorzugsweise den Sendern/Empfängern in der Aufsteckbürste und im Handstück, können Informationen übertragen werden. Dies ist insbesondere vorteilhaft, wenn einer der Sender und/oder Empfänger eine geringere Reichweite hat, beispielsweise ein Sender in der Aufsteckbürste, welcher aufgrund des beschränkten Bauraums in der Aufsteckbürste nur als passives RFID-Tag mit beschränkter Reichweite ausgebildet ist. Dieser sendet dann seine Informationen zunächst an einen Empfänger im Handstück, wo die Informationen ggf. weiterverarbeitet und dann von einem Sender im Handstück an einen Empfänger in der Anzeigeeinrichtung übertragen werden.

Die Informationsübertragung erfolgt vorzugsweise unidirektional von der Zahnbürste zur Anzeigeeinrichtung oder von der Anzeigeeinrichtung zur Zahnbürste, kann aber auch bidirektional von der Zahnbürste zur Anzeigeeinrichtung und umgekehrt erfolgen. Durch die Informationsübertragung werden vorzugsweise Informationen übertragen, die sich auf die Zahnbürste beziehen. Von der Zahnbürste zur Anzeigeeinrichtung werden vorzugsweise die oben genannten Informationen über den Zustand der Zahnbürste und/oder über den aktuellen Putzvorgang übertragen. Von der Anzeigeeinrichtung zur Zahnbürste werden vorzugsweise die oben genannten Steuerbefehle übertragen.

Weiterhin kann aber auch die Zahnbürste zur Steuerung, insbesondere zur Konfiguration, der Anzeigeeinrichtung verwendet werden. Dies ist insbesondere dann vorteilhaft, wenn die Zahnbürste über eine ausreichende Anzahl von Bedienelementen, insbesondere Tasten, Schalter oder dergleichen, verfügt, über die der Benutzer Befehle eingeben kann. Vorzugsweise werden dann bestimmte über diese Bedienelemente der Zahnbürste eingegebene Befehle als Steuerungsbefehle für die Anzeigeeinrichtung interpretiert und mittels der drahtlosen Informationsübertragung von der Zahnbürste zur Anzeigeeinrichtung übertragen. Auf diese Weise kann beispielsweise das Ein- und Ausschalten der Anzeigeeinrichtung, die Einstellung des Datums, der Uhrzeit, des Benutzernamens o. Ä. bequem über die Zahnbürste vorgenommen werden, ohne dass am Zahnputzglas mit der Anzeigeeinrichtung eigene Bedienelemente vorgesehen werden müssen.

In einer bevorzugten Variante dieser Ausführung der Erfindung weisen sowohl die Zahnbürste als auch das Zahnputzglas jeweils eine Sekundärspule zur induktiven Energieübertragung auf, und die drahtlose Informationsübertragung erfolgt zwischen diesen beiden Sekundärspulen. Dabei werden vorzugsweise die beiden Sekundärspulen durch ein Magnetfeld gekoppelt und durch eine Modulation dieses Magnetfeldes Informationen von der Zahnbürste zur Anzeigeeinrichtung im Zahnputzglas und/oder umgekehrt übertragen. Besonders bevorzugt nimmt dabei eine der Sekundärspulen die Funktion eines RFID-Readers und die andere Sekundärspule die Funktion eines RFID-Tags ein.

Die Informationsübertragung kann dabei separat von oder sogar gleichzeitig mit der induktiven Energieübertragung zu den beiden Sekundärspulen in der Zahnbürste bzw. im Zahnputzglas, vorzugsweise von der Primärspule in einer Ladestation aus, erfolgen. Durch diese Mehrfachverwendung der Sekundärspulen in der Zahnbürste und im Zahnputzglas werden für die Sender und/oder Empfänger nur wenige zusätzliche Bauteile, insbesondere keine weiteren Spulen, in der Zahnbürste bzw. im Zahnputzglas benötigt.

In einer weiteren bevorzugten Ausführung der Erfindung ist die Anzeigeeinrichtung zur drahtlosen Informationsübertragung mit einer Ladestation und die Ladestation zur drahtlosen Informationsübertragung mit der Zahnbürste eingerichtet. Die Ladestation wirkt dabei als eine Art "Relais" für die Informationsübertragung zwischen der Zahnbürste und der Anzeigeeinrichtung. Dies kann vorteilhaft sein, da in der Ladestation im Allgemeinen ein größerer Bauraum für elektronische Bauelemente für die Sender, Empfänger und/oder zugehörige Informationsverarbeitungseinheiten sowie eine größere zu deren Betrieb erforderliche elektrische Leistung zur Verfügung steht.

Vorzugsweise ist dabei gemäß der oben beschriebenen Ausführung die Zahnbürste durch die Ladestation aufladbar, und die Zahnbürste befindet sich während des Aufladevorgangs in dem Zahnputzglas. Dann kann das Zahnputzglas mit der Anzeigeeinrichtung die anzuzeigenden Informationen unmittelbar von der Ladestation empfangen und/oder andere, vorzugsweise über das Zahnputzglas eingegebene Informationen unmittelbar an die Ladestation übertragen, und die Informationsverarbeitung erfolgt weitgehend in der Ladestation. Dadurch sind in dem Zahnputzglas nur noch wenige elektronische oder sonstige Bauelemente zum Betrieb der Anzeigeeinrichtung erforderlich, da die Informationsverarbeitung weitgehend in die Ladestation "ausgelagert" wird. Hierdurch kann das Zahnputzglas einfacher und damit auch preiswerter hergestellt werden, was insbesondere im Falle eines Ersatzes des Zahnputzglases für den Benutzer einen Vorteil darstellt.

Die Informationsübertragung zwischen der Ladestation und dem Zahnputzglas erfolgt in dieser Ausführung vorzugsweise über eine Primärspule in der Ladestation und eine Sekundärspule in dem Zahnputzglas, die dazu vorgesehen sind, induktiv Energie von der Ladestation auf das Zahnputzglas und damit auf die Anzeigeeinrichtung zu übertragen. Weiterhin erfolgt die Informationsübertragung zwischen der Ladestation und der Zahnbürste in dieser Ausführung vorzugsweise über die Primärspule in der Ladestation und eine Sekundärspule in der Zahnbürste, die dazu vorgesehen sind, induktiv Energie von der Ladestation auf die Zahnbürste zu übertragen.

Dabei werden vorzugsweise die Primärspule in der Ladestation mit der Sekundärspule in der Anzeigeeinrichtung und/oder mit der Sekundärspule in der Zahnbürste durch ein Magnetfeld gekoppelt und durch eine Modulation des Magnetfeldes Informationen von der Zahnbürste zu der Ladestation und von der Ladestation zu der Anzeigeeinrichtung im Zahnputzglas und/oder jeweils umgekehrt übertragen. Besonders bevorzugt nehmen dabei die beiden Sekundärspulen jeweils die Funktion eines RFID-Tags und die Primärspule die Funktion eines RFID-Readers ein. Weiterhin kann auch nur eine der beiden Informationsübertragungsstrecken durch eine Modulation des Magnetfeldes realisiert werden und die andere durch eine andere Technologie.

Selbstverständlich können auch Merkmale verschiedener oben beschriebener Ausführungsformen der Erfindung, soweit sinnvoll und technisch möglich, miteinander kombiniert werden.

Weitere Ausgestaltungen und Vorteile der Erfindung gehen aus der folgenden Beschreibung in Verbindung mit den Zeichnungen hervor. Dabei zeigen:
- Fig. 1:: eine erfindungsgemäße Kombination einer elektrischen Zahnbürste mit einem Zahnputzglas, welches eine Anzeigeeinrichtung aufweist, die
a) in der Wandfläche des Zahnputzglases angeordnet und von innen ablesbar ist;
b) in der Wandfläche des Zahnputzglases angeordnet und von außen ablesbar ist;
c) im Boden des Zahnputzglases angeordnet und von oben ablesbar ist.
- Fig. 2:: eine erfindungsgemäße Kombination einer elektrischen Zahnbürste mit einem Zahnputzglas und einer Ladestation, wobei die Anzeigeeinrichtung im Zahnputzglas durch die Ladestation mit Energie versorgt wird;
- Fig. 3:: eine Ladestation und ein Zahnputzglas gemäß der Erfindung, wobei die Anzeigeeinrichtung im Zahnputzglas durch Bewegungen des Zahnputzglases relativ zur Ladestation konfigurierbar ist.

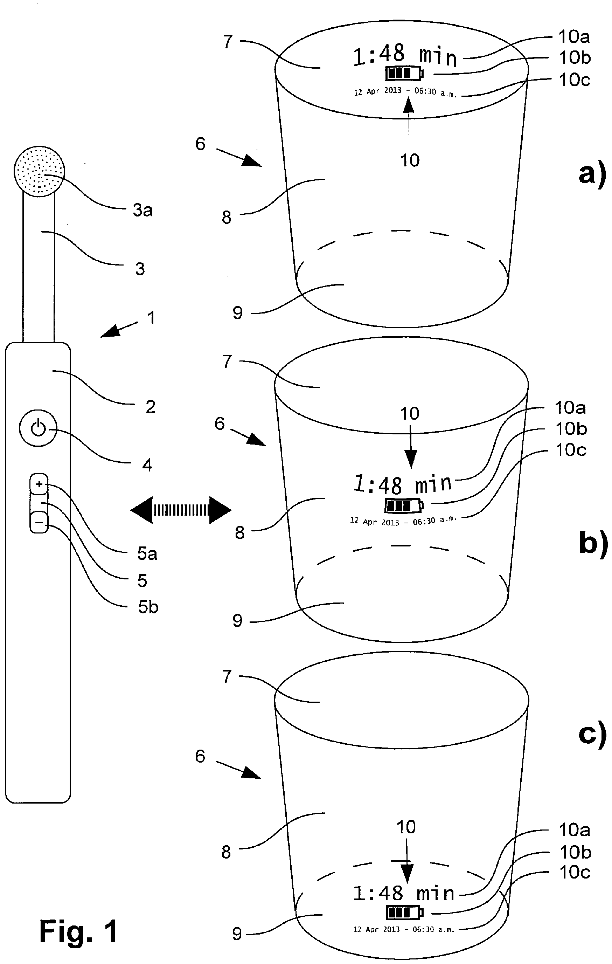

Fig. 1 zeigt eine erfindungsgemäße Kombination einer elektrischen Zahnbürste 1 mit einem Zahnputzglas 6, welches eine Anzeigeeinrichtung 10 aufweist, in drei verschiedenen Ausführungen a), b) und c) für unterschiedliche Anordnungen der Anzeigeeinrichtung 10 innerhalb des Zahnputzglases 6, welche alternativ oder auch miteinander kombiniert eingesetzt werden können.

Die elektrische Zahnbürste 1 weist in herkömmlicher Weise ein Handstück 2 und eine auswechselbare Aufsteckbürste 3 auf. Die Aufsteckbürste 3 weist einen runden Borstenkopf 3a auf, der eine rotierend-oszillierende Bewegung ausführt. Es kann aber genauso ein vibrierender Borstenkopf bzw. eine vibrierende Aufsteckbürste für eine sogenannte Schallzahnbürste oder eine Aufsteckbürste mit einer anderen Art der Bewegung, beispielsweise mit einer linearen Hin- und Her-Bewegung, oder mit einer Kombination der genannten Bewegungsarten montiert sein.

Das Handstück 2 weist einen Ein-/Ausschalter 4 und eine Tastwippe 5 auf, auf der ein mit "+" gekennzeichneter erster Taster 5a und ein mit "-" gekennzeichneter zweiter Taster 5b angeordnet sind. Mit der Tastwippe 5 kann beispielsweise eines von mehreren zur Verfügung stehenden Zahnputzprogrammen ausgewählt werden, indem die Reihenfolge der Programme mit dem ersten Taster 5a zyklisch in einer Richtung oder mit dem zweiten Taster 5b zyklisch in der entgegengesetzten Richtung durchlaufen werden. Mit der Tastwippe 5 kann beispielsweise auch die Bewegungsgeschwindigkeit der Zahnbürste eingestellt werden. An dem Handstück 2 können auch noch weitere, hier nicht dargestellte Bedienelemente wie Schalter, mechanische Tasten oder Sensor-Tasten, Schieber oder dergleichen angeordnet sein.

Die Zahnbürste 1 ist zum bidirektionalen Informationsaustausch mit der Anzeigeeinrichtung 10 im Zahnputzglas 6 über eine drahtlose Verbindung, angedeutet durch den in beide Richtungen weisenden Pfeil, eingerichtet.

Zu diesem Zweck ist sowohl in der Zahnbürste 1 als auch im Zahnputzglas 6 jeweils ein entsprechender Sender/Empfänger angeordnet, welche jedoch nicht dargestellt sind. Eine derartige drahtlose Verbindung, beispielsweise über eine standardisierte Funktechnologie wie Bluetooth oder WLAN oder eine proprietäre Funktechnologie oder auch über eine optische wie beispielsweise eine Infrarot-Verbindung ist aus dem Stand der Technik auch für den Einsatz zwischen einer elektrischen Zahnbürste und einer externen Anzeigeeinrichtung bekannt und wird daher hier nicht näher beschrieben.

Das Zahnputzglas 6 ist vorzugsweise aus einem transparenten, kratz- und schlagfesten Kunststoff wie Polycarbonat gefertigt. Die Anzeigeeinrichtung 10 ist vorzugsweise eine LCD- oder OLED-Anzeige, vorzugsweise in einer transparenten Ausführung. Die Energieversorgung der Anzeigeeinrichtung 10 erfolgt vorzugsweise über eine aufladbare oder nicht-aufladbare Batterie (nicht dargestellt), die in der Wand 7, 8 oder im Boden 9 des Zahnputzglases 6 vor Feuchtigkeit geschützt angeordnet und mit der Anzeigeeinrichtung 10 elektrisch verbunden ist. Falls eine nicht-aufladbare Batterie mit langer Lebensdauer, vorzugsweise eine Lithium-Batterie, zum Einsatz kommt, kann diese sogar im Material des Zahnputzglases 6 eingegossen sein.

Das Zahnputzglas 6 hat eine leicht konische, sich nach unten hin verjüngende Form. In den perspektivischen Darstellungen in Fig. 1 a) - c) ist jeweils eine hintere Wandfläche 7, eine vordere Wandfläche 8 und ein Boden 9 des Zahnputzglases 6 sichtbar, wobei die hintere bzw. die vordere Wandfläche 7, 8 natürlich nur relativ zur Drehstellung des Zahnputzglases 6 und zur Betrachtungsrichtung definiert sind.

In Fig. 1 a) ist die Anzeigeeinrichtung 10 in der hinteren Wandfläche 7 des Zahnputzglases 6 sichtbar. Diese Sichtbarkeit ist von Vorteil, wenn das Zahnputzglas 6 eine große Konizität aufweist und/oder der Betrachtungswinkel relativ steil ist, beispielsweise wenn das Zahnputzglas 6 vor dem Benutzer auf dem hinteren Waschbeckenrand und damit relativ tief steht. Unter diesen Bedingungen ist bei einer Sichtbarkeit der Anzeigeeinrichtung 10 in der hinteren Wandfläche 7 der Betrachtungswinkel gegenüber der Anzeigeeinrichtung 10, d. h. der Winkel zwischen der Blickrichtung und einer Tangentialebene der Wandfläche 7 am Betrachtungspunkt, relativ groß, beispielsweise größer als 60 Grad, woraus eine gute Ablesbarkeit resultiert.

Um eine Ablesbarkeit der Informationen auf der Anzeigeeinrichtung 10 in der hinteren Wandfläche 7 zu erreichen, müssen die Informationen - unter der Annahme, dass die Anzeigeeinrichtung 10 standardmäßig von außen ablesbar ist - seitenverkehrt dargestellt sein. Außerdem sollte die Anzeigeeinrichtung 10 relativ weit oben, möglichst nahe dem oberen Rand des Zahnputzglases 6 angeordnet oder die Informationen in diesem Bereich der Anzeigeeinrichtung 10 dargestellt sein, damit nicht die vordere Kante des oberen Randes des Zahnputzglases 6 oder die vordere Wand 8 die Ablesbarkeit der Informationen beeinträchtigt oder sogar verhindert. Dies könnte beispielsweise der Fall sein, wenn das Material des Zahnputzglases 6 verschmutzt oder nicht vollständig transparent ist oder einen starken Brechungsindex aufweist, wodurch die dahinter sichtbaren Informationen verzerrt werden können.

In Fig. 1 b) ist die Anzeigeeinrichtung 10 in der vorderen Wandfläche 8 des Zahnputzglases 6 sichtbar. Diese Sichtbarkeit ist von Vorteil, wenn das Zahnputzglas 6 eine geringe Konizität aufweist und/oder der Betrachtungswinkel relativ flach ist, beispielsweise wenn das Zahnputzglas 6 vor dem Benutzer auf einer Konsole oder in einer Wandhalterung und damit relativ hoch steht. Unter diesen Bedingungen ist bei einer Sichtbarkeit der Anzeigeeinrichtung 10 in der vorderen Wandfläche 8 der Betrachtungswinkel gegenüber der Anzeigeeinrichtung 10 wiederum relativ groß, beispielsweise größer als 60 Grad, woraus wieder eine gute Ablesbarkeit resultiert.

Um eine Ablesbarkeit der Informationen auf der Anzeigeeinrichtung 10 in der vorderen Wandfläche 8 zu erreichen, müssen die Informationen - unter der gleichen Annahme wie oben - seitenrichtig dargestellt sein. Die Höhe der dargestellten Informationen relativ zum Zahnputzglas 6 spielt in diesem Fall im Allgemeinen keine Rolle, da hier keine Beeinträchtigung der Ablesbarkeit der Informationen durch andere Bereiche des Zahnputzglases 6 gegeben ist.

In Fig. 1 c) ist die Anzeigeeinrichtung 10 im Boden 9 des Zahnputzglases 6 sichtbar. Diese Sichtbarkeit ist von Vorteil, wenn der Betrachtungswinkel sehr steil ist, beispielsweise wenn das Zahnputzglas 6 sehr nahe vor dem Benutzer auf einem Waschtisch, einer Spüle oder dergleichen und damit sehr tief steht. Unter diesen Bedingungen ist bei einer Sichtbarkeit der Anzeigeeinrichtung 10 im Boden 9 der Betrachtungswinkel gegenüber der Anzeigeeinrichtung 10 sehr groß, beispielsweise fast 90 Grad, woraus eine sehr gute Ablesbarkeit resultiert.

Um eine Ablesbarkeit der Informationen auf der Anzeigeeinrichtung 10 im Boden 9 zu erreichen, müssen die Informationen - unter der Annahme, dass die Anzeigeeinrichtung 10 standardmäßig von oben ablesbar ist - seitenrichtig dargestellt sein.

Welche der Anordnungen gemäß den Fig. 1 a) - c) zum Einsatz kommt, kann vom Hersteller des erfindungsgemäßen Zahnputzglases durch die Anordnung der Anzeigeeinrichtung 10 und deren Programmierung fest vorgegeben sein. Vorzugsweise ist die Anordnung jedoch vom Benutzer durch die Konfiguration der Anzeigeeinrichtung 10 wählbar, wobei dann einerseits die Anzeigeeinrichtung 10 sich auf alle in Frage kommenden Bereiche des Zahnputzglases 6 (hintere Wand 7, vordere Wand 8 und/oder Boden 9) erstrecken muss und die Steuerung der Anzeigeeinrichtung 10 Mittel aufweisen muss, um die Informationen wahlweise in verschiedenen dieser Bereiche seitenrichtig bzw. seitenverkehrt darzustellen.

Bei einer Anordnung der Anzeigeeinrichtung 10 in der hinteren Wandfläche 7 oder in der vorderen Wandfläche 8 werden die Informationen durch die (jeweils aus Benutzersicht) konkave bzw. konvexe Wandkrümmung verzerrt dargestellt. Diese Verzerrung kann durch eine entsprechende, "entgegengesetzt verzerrte" Darstellung der Informationen auf der Anzeigeeinrichtung 10 "herausgerechnet" und dadurch zumindest teilweise aufgehoben werden.

Dass die auf der Anzeigeeinrichtung 10 dargestellten Informationen stets nach vorne, in Blickrichtung des Benutzers, weisen, kann dadurch sichergestellt werden, dass das Zahnputzglas 6 eine feste Markierung auf der Vorderseite, beispielsweise in Form eines Herstellerlogos, aufweist, und der Benutzer darauf hingewiesen wird, diese Seite des Zahnputzglases 6 stets nach vorne, also ihm zugewandt, auszurichten.

Die Anzeigeeinrichtung 10 gemäß dem Ausführungsbeispiel in Fig. 1 weist drei Bereiche 10a, 10 b, 10c auf:
In Bereich 10a wird die momentane Zahnputzdauer angezeigt (in Fig. 1: "1:48 min"). Der Beginn und auch das Ende des Zahnputzvorgangs werden der Anzeigeeinrichtung 10 dabei von der Zahnbürste 1 durch die drahtlose Verbindung signalisiert. Die Anzeige der Zahnputzdauer unterstützt den Benutzer dabei, die empfohlene Zahnputzdauer (beispielsweise 2 Minuten) einzuhalten. Weiterhin kann beispielsweise auch nach jeweils einem Viertel dieser Zeit (also beispielsweise nach jeweils 30 Sekunden) ein anderer Quadrant des Gebisses angezeigt werden, den der Benutzer nun putzen soll (in Fig. 1 nicht dargestellt). Weiterhin kann beispielsweise das aktuell gewählte Zahnputzprogramm angezeigt werden, welches über die Tastwippe 5 der Zahnbürste 1 ausgewählt wird (in Fig. 1 ebenfalls nicht dargestellt).

In Bereich 10b wird der momentane Ladezustand des Akkus der Zahnbürste 1 angezeigt. Dies erfolgt in üblicher Weise durch ein Batteriesymbol, in dem je nach dem Ladezustand zwischen null und vier schwarze Balken angezeigt werden (0 = Akku leer, 4 = Akku voll geladen). In Fig. 1 werden drei schwarze Balken angezeigt, entsprechend einem Ladezustand von ca. 75 %. Auch der Ladezustand des Akkus wird der Anzeigeeinrichtung 10 dabei von der Zahnbürste 1 durch die drahtlose Verbindung mitgeteilt.

In Bereich 10c werden das aktuelle Datum und die aktuelle Uhrzeit angezeigt (in Fig. 1: "12. April 2013, 6:30 Uhr"). Durch das Vorsehen einer Uhr und eines Kalenders in der Steuerung der Anzeigeeinrichtung 10 ist es beispielsweise auch möglich, dem Benutzer nach Ablauf einer bestimmten Zeit (z. B. nach drei Monaten) den empfohlenen Austausch der Aufsteckbürste 3 über die Anzeigeeinrichtung 10 zu signalisieren.

Durch die Anzeigeeinrichtung 10 ist es möglich, an der Zahnbürste 1 weitgehend oder sogar vollständig auf Anzeigeelemente zu verzichten, die ohnehin während des Zähneputzens nur schlecht sichtbar wären. Die Anzeigeeinrichtung 10 hat weiterhin den Vorteil, dass sie auch noch funktioniert, wenn der Akku der Zahnbürste 1 leer ist, da sie über eine von der Zahnbürste 1 getrennte Energieversorgung verfügt, so dass die Informationen in der Anzeigeeinrichtung 10 auch in diesem Fall erhalten bleiben.

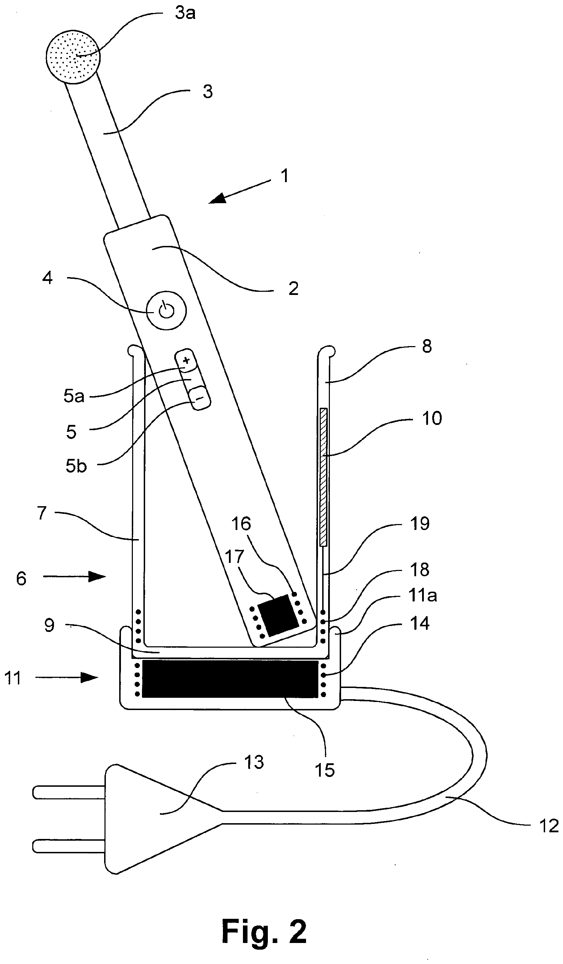

Fig. 2 zeigt im Querschnitt eine erfindungsgemäße Kombination aus einer elektrischen Zahnbürste 1, einem Zahnputzglas 6 mit einer Anzeigeeinrichtung 10 und einer Ladestation 11. Das zylindrische Zahnputzglas 6 steht auf der Ladestation 11 und ist durch eine niedrige seitliche Umfassungswand 11a gegen Wegrutschen gesichert. Die Zahnbürste 1 steht geneigt im Zahnputzglas 6.

In der Ladestation 11 steht senkrecht eine Primärspule 14, deren Windungen im Querschnitt auf beiden Seiten durch jeweils vier Punkte angedeutet sind. Der Durchmesser der Primärspule 14 ist etwa so groß wie der Durchmesser des Zahnputzglases 6. Im Inneren der Primärspule 14 ist ein zylindrischer, massiver Spulenkern 15 angeordnet. Durch diese Anordnung wirkt das von der Primärspule 14 erzeugte, vertikale Magnetfeld nahezu gleichmäßig durch die gesamte Fläche des Bodens 9 des Zahnputzglases 6.

Im Gehäuse des Handstücks 2 ist an dessen unterem Ende in der Erstreckungsrichtung des Handstücks 2 eine Sekundärspule 16 mit einem zylindrischen, massiven Spulenkern 17 angeordnet. Die Sekundärspule 16 steht wegen der Neigung der Zahnbürste 1 im Zahnputzglas 6 nicht ganz senkrecht, wird aber dennoch von dem von der Primärspule 14 erzeugten Magnetfeld in ausreichendem Maße durchflossen, um in der Sekundärspule 16 eine Spannung zu induzieren, durch die in üblicher Weise der Akku der Zahnbürste 1 aufgeladen wird. Dadurch ist die induktive Aufladung der Zahnbürste 1 in jeder möglichen Position der geneigt (oder alternativ auch senkrecht) stehenden Zahnbürste 1 im Zahnputzglas 6 möglich.

Es sind auch andere Anordnungen der Primärspule 14 in der Ladestation 11 und der Sekundärspule 16 in der Zahnbürste 1 denkbar. Beispielsweise kann die Primärspule 14 auch in der seitlichen Umfassungswand 11a der Ladestation 11 angeordnet sein. Dabei ist die Umfassungswand 11a dann entsprechend weit nach oben verlängert, so dass die Primärspule 14 in der Ladestation 11 um das Zahnputzglas 6 umläuft und die geneigt stehende Sekundärspule 16 in der Zahnbürste 1 umschließt. Weitere Anordnungen sind aus der DE 10 2007 053 985 A1 sowie aus der WO 2012/085819 A1 bekannt.

Die Ladestation 11 ist über ein Kabel 12 und einen Stecker 13 mit dem Stromnetz verbunden. Die weiteren für die induktive Energieübertragung notwendigen Bauteile wie ein Trafo, eine Steuerelektronik zur Erzeugung der notwendigen Frequenz des Stromes in der Primärspule 14, die entsprechende Gleichrichterschaltung in der Zahnbürste 1 für die in der Sekundärspule 16 induzierte Spannung usw. sind hinreichend bekannt und in Fig. 2 nicht dargestellt.

Weiterhin ist auch in der Wand 7, 8 des Zahnputzglases 6 an dessen unterem Ende eine Sekundärspule 18 angeordnet, deren Durchmesser etwa dem Durchmesser der Primärspule 14 entspricht. Es ist aber auch möglich, dass die beiden Durchmesser unterschiedlich sind. In der in Fig. 2 gezeigten Anordnung stehen die Primärspule 14 in der Ladestation 11 und die Sekundärspule 18 im Zahnputzglas 6 koaxial übereinander. Bei anderen Anordnungen ist es jedoch beispielsweise auch möglich, dass die Primärspule 14 die Sekundärspule 18 umschließt oder dass die Sekundärspule 18 die Primärspule 14 umschließt. Die Anordnung muss lediglich so beschaffen sein, dass eine induktive Energieübertragung von der Primärspule 14 zur Sekundärspule 18 möglich ist.

Alternativ kann die Sekundärspule 18 auch im Boden 9 des Zahnputzglases 6 angeordnet sein. Der Boden 9 kann in diesem Fall auch einen Spulenkern für die Sekundärspule 18 in Form einer zylindrischen, flachen Scheibe aufweisen. Der Durchmesser der Sekundärspule 18 und/oder des Spulenkerns im Boden des Zahnputzglases 6 kann etwa dem Durchmesser des Zahnputzglases 6 entsprechen oder auch geringer sein, um etwa den radial äußeren Bereich des Bodens 9 freizuhalten, damit die induktive Energieübertragung zur Sekundärspule 16 der Zahnbürste 1 nicht zu stark beeinflusst wird.

Die in der Sekundärspule 18 induzierte Spannung versorgt über eine (nicht dargestellte) Gleichrichterschaltung und ein Verbindungskabel 19 die Anzeigeeinrichtung 10, welche in der Seitenwand 8 des Zahnputzglases 6 angeordnet ist, mit elektrischer Energie. Außerdem ist es möglich - vorzugsweise durch entsprechende Modulation der Primärspannung in der Primärspule 14 -, Daten zur Sekundärspule 18 drahtlos zu übertragen und von dort nach einer Demodulation, Verarbeitung und Aufbereitung durch geeignete elektronische Bauteile wie eine Demodulationsschaltung, einen Signalprozessor und/oder einen Mikroprozessor (nicht dargestellt) zur Anzeige an die Anzeigeeinrichtung 10 weiterzuleiten.

Bei Verwendung einer Datenübertragung zwischen der Ladestation 11 und der Anzeigeeinrichtung 10 kann auch der Sender/Empfänger für die Informationsübertragung zwischen der Anzeigeeinrichtung 10 und der Zahnbürste 1 in der Ladestation 11 angeordnet sein. Die Anzeigeeinrichtung 10 benutzt dann die Ladestation 11 als "Relais" bei der Informationsübertragung an die bzw. von der Zahnbürste 1. Dies ist besonders vorteilhaft, da der Bauraum im Zahnputzglas 6 sehr begrenzt ist und daher im Zahnputzglas 6 möglichst wenige Bauteile angeordnet sein sollten bzw. möglichst wenig Funktionalität enthalten sein sollte.

Sowohl die Sekundärspule 18 als auch die Anzeigeeinrichtung 10 und die weiteren zu deren Energieversorgung und Steuerung nötigen elektronischen Bauteile sind im Ausführungsbeispiel in Fig. 2 fest in das Material des Zahnputzglases 6 integriert, und zwar vorzugsweise bei dessen Herstellung in das Material eingegossen. Es ist aber auch möglich, das Zahnputzglas 6 separat von der Sekundärspule 18, der Anzeigeeinrichtung 10 und/oder von den weiteren Bauteilen herzustellen und erst danach die Sekundärspule 18, die Anzeigeeinrichtung 10 und/oder die weiteren Bauteile an, auf oder in dem Zahnputzglas 6 zu montieren.

Die Ladestation 11 kann auf diese Weise sowohl die Zahnbürste 1 als auch die Anzeigeeinrichtung 10 mit elektrischer Energie versorgen. Die induktive Energieübertragung kann auch so gesteuert werden, dass nur entweder die Zahnbürste 1 oder die Anzeigeeinrichtung 10 versorgt wird. Dazu ermittelt vorzugsweise die Ladestation 11 die Belastung des induktiven Energieübertragungskreises auf der Sekundärseite und erkennt daran, ob zur Zahnbürste 1 und/oder zur Anzeigeeinrichtung 10 gerade induktiv Energie übertragen wird. Falls sowohl an die Zahnbürste 1 als auch an die Anzeigeeinrichtung 10 Energie übertragen wird, wird vorzugsweise ein Steuersignal an die Anzeigeeinrichtung 10 übertragen, aufgrund dessen die Anzeigeeinrichtung 10 sich abschaltet oder in einen Ruhemodus geht. Dies kann beispielsweise sinnvoll sein, falls die Leistung der Ladestation 11 für eine gleichzeitige Energieübertragung an die Zahnbürste 1 und an die Anzeigeeinrichtung 10 nicht ausreicht, und/oder falls die Anzeigeeinrichtung 10 bei ins Zahnputzglas 6 eingestellter Zahnbürste 1 ohnehin nicht sichtbar wäre, beispielsweise wenn die Anzeigeeinrichtung 10 wie in Fig. 1 a) von innen ablesbar ist.

Gleichzeitig kann sich die Anzeigeeinrichtung 10 automatisch ausschalten, wenn das Zahnputzglas 6 von der Ladestation 11 abgehoben wird, da die induktive Energieübertragung dann unterbrochen und die Anzeigeeinrichtung 10 nicht mehr mit elektrischer Energie versorgt wird. Dies kann wünschenswert sein, da der Benutzer bei der Verwendung des Zahnputzglases 6 zum Ausspülen des Mundes nach dem Zähneputzen durch die Anzeige von Informationen auf der Anzeigeeinrichtung 10 möglicherweise irritiert wäre und die Informationen dabei ohnehin kaum ablesen könnte.

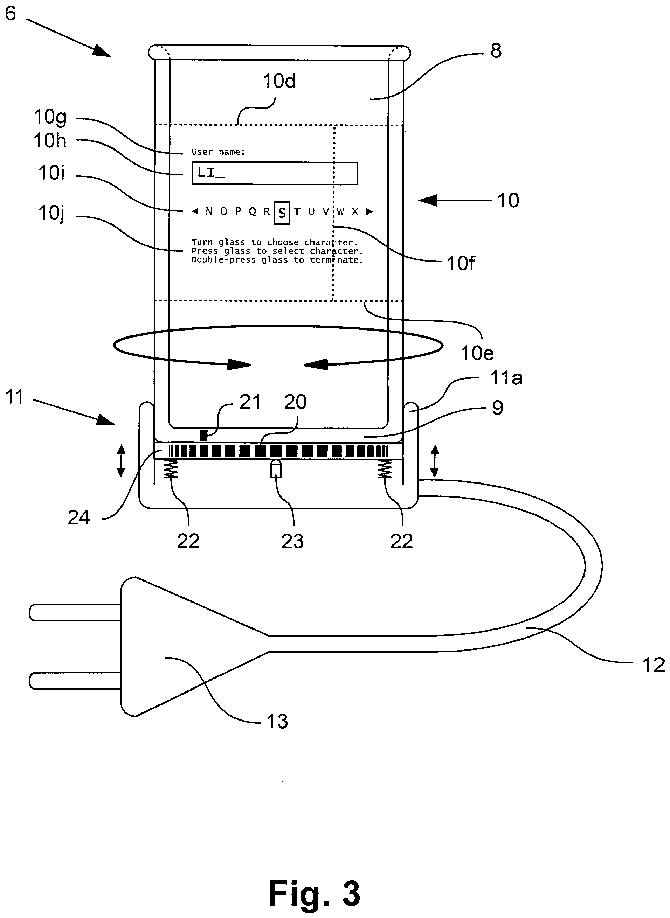

In Fig. 3 ist beispielhaft ein Benutzerdialog aus dem Konfigurationsvorgang der Anzeigeeinrichtung 10, hier konkret die Eingabe des Benutzernamens, dargestellt.

Die Anzeigeeinrichtung ist in diesem Ausführungsbeispiel ein umlaufendes, transparentes Display 10, vorzugsweise ein OLED-Display, das auf dem gesamten Umfang der Wand eines zylindrischen Zahnputzglases 6 angeordnet ist. Das Display 10 ist in Form eines rechteckigen Streifens hergestellt und wird in die Wand des Zahnputzglases 6 eingelegt oder auf diese aufgeklebt, wobei eine vertikale Stoßstelle 10f entsteht. Der horizontale obere Rand 10d, der horizontale untere Rand 10e sowie die vertikale Stoßstelle 10f des Displays 10 sind in Fig. 3 durch gestrichelte Linien angedeutet. Da das Display 10 transparent ist, sind die Linien 10d, 10e und 10f jedoch nahezu unsichtbar.

Das Display 10 ist so in das Material des Zahnputzglases 6, vorzugsweise Polycarbonat, integriert, dass die Informationen auch über die Stoßstelle 10f hinweg dargestellt werden können, ohne dass an dieser Stelle die Ablesbarkeit nennenswert beeinträchtigt ist.

Der in Fig. 3 beispielhaft dargestellte Benutzerdialog zur Eingabe des Benutzernamens weist vier Bereiche auf, nämlich die Eingabeaufforderung 10g, das Eingabefeld 10h, die Zeichenauswahlleiste 10i und die Eingabeanweisungen 10j.

Die Eingabeaufforderung 10g teilt dem Benutzer mit, welche Konfigurationsinformation in diesem Benutzerdialog eingegeben werden soll, in diesem Fall der Benutzername ("User name").

Im Eingabefeld 10h werden die bisher eingegebenen Zeichen angezeigt (in diesem Fall "LI"), wobei ein Cursor die Position des nächsten einzugebenden Zeichens markiert.

In der Zeichenauswahlleiste 10i wird ein Ausschnitt des Alphabets angezeigt (in diesem Fall die Buchstaben "N" bis "X"), wobei ein Zeichen in der Mitte (in diesem Fall der Buchstabe "S") durch Vergrößerung, Fettschrift und Umrahmung deutlich hervorgehoben ist. Dieses Zeichen ist das ausgewählte Zeichen, welches bei Bestätigung der Auswahl in das Eingabefeld 10h an der Stelle des Cursors übernommen wird.

Die Eingabeanweisungen 10j teilen dem Benutzer die in diesem Benutzerdialog zur Verfügung stehenden Eingabebefehle mit, welches in diesem Fall folgende Eingabebefehle sind:
Der Benutzer kann das Zahnputzglas 6 um seine eigene Achse drehen, um ein Zeichen auszuwählen ("Turn glass to choose character."). Diese Bewegung ist in Fig. 3 durch einen um das Zahnputzglas 6 umlaufenden Doppelpfeil angedeutet. Beim Drehen des Zahnputzglases 6 wandert der in der Zeichenauswahlleiste 10i dargestellte Ausschnitt des Alphabets je nach Drehrichtung nach vorne bzw. nach hinten, so dass sich auch das ausgewählte Zeichen in der Mitte ändert. Da das Display 10 um den gesamten Umfang des Zahnputzglases 6 umläuft, kann durch eine entsprechende, der Drehung gegenläufige Verschiebung der dargestellten Informationen stets der Eindruck einer nahezu still stehenden Informationsanzeige auf dem Display 10 erzielt werden.

Weiterhin kann der Benutzer das Zahnputzglas 6 nach unten drücken, um das ausgewählte Zeichen zu bestätigen und so in das Eingabefeld 10h zu übernehmen ("Press glass to select character."). Diese Bewegung ist durch zwei senkrechte Doppelpfeile links und rechts der Ladestation 11 angedeutet.

Schließlich kann der Benutzer das Zahnputzglas 6 zweimal kurz hintereinander nach unten drücken, um die Eingabe von Zeichen in das Eingabefeld 10h abzuschließen und die eingegebene Zeichenkette in die einzugebende Konfigurationsinformation, hier den Benutzernamen, zu übernehmen ("Double-press glass to terminate.").

Die verwendeten Gesten "Drehen", "Drücken" und "doppeltes Drücken" des Zahnputzglases 6 entsprechen annähernd den auch bei anderen Eingabemitteln wie Computermäusen, Drehknöpfen an Autonavigationssystemen etc. verwendeten Gesten "Bewegen" bzw. "Drehen", "Klicken" und "Doppelklicken". Diese Gesten sind daher vielen Benutzern schon bekannt und können somit intuitiv verwendet werden.

Die Erkennung einer Drehung des Zahnputzglases 6 erfolgt über eine Reihe von Markierungselementen 20, welche umlaufend unter der Oberfläche der Ladestation 11 angeordnet sind, und einen Sensor 21, welcher im Boden des Zahnputzglases 6 angeordnet ist. Die Markierungselemente 20 sind Permanentmagnete. Bei dem Sensor 21 handelt es sich entsprechend um einen Sensor, der die Änderung eines Magnetfeldes in eine elektrische Spannung oder einen Schalterzustand umsetzen kann, vorzugsweise um einen Hall-Sensor oder um einen Reedschalter.

Beim Drehen des Zahnputzglases 6 bewegt sich der Sensor 21 über mehrere Markierungselemente 20 hinweg und erzeugt so eine Reihe von Spannungsänderungen bzw. elektrischen Impulsen, die von einer geeigneten, im Zahnputzglas 6 angeordneten elektronischen Schaltung ausgewertet oder gezählt werden. Daraus wird der Winkel bestimmt, um den das Zahnputzglas 6 gedreht wird.

Um eine Referenzposition zu definieren, kann eines der Markierungselemente 20 beispielsweise ein schwächerer oder stärkerer Magnet als die anderen Markierungselemente 20 sein, oder es wird eines der Markierungselemente 20 ganz weggelassen. Beim Bewegen über dieses unterschiedliche Markierungselement 20 bzw. über die Lücke hinweg kann dann die elektronische Schaltung im Zahnputzglas 6 die Referenzposition erkennen. Unter der Annahme, dass die Ladestation 11 relativ zum Benutzer eine feste Position hat (gegeben beispielsweise durch ihre Formgebung, die eine eindeutige "Vorderseite" der Ladestation 11 definiert), können mit Hilfe der Referenzposition die Informationen auf dem Display 10 so angezeigt werden, dass sie stets nach "vorne", also zur angenommenen Blickrichtung des Benutzers hin, gewandt sind.

Beim Herunterdrücken des Zahnputzglases 6 drückt dieses auch die Oberseite 24 der Ladestation 11 herunter. Zu diesem Zweck ist die Oberseite 24 der Ladestation 11 auf mehreren Druckfedern 22 gelagert, welche umlaufend und vorzugsweise in gleichen Winkelabständen angeordnet sind, und kann einen leichten vertikalen Hub ausführen. Entfällt der Druck auf die Oberseite 24, wird diese durch die Druckfedern 22 wieder in ihre Ausgangslage zurückgeführt. Die vertikale Bewegung der Oberseite 24 wird durch einen Taster 23 detektiert, welcher unter der Oberseite 24 in der Ladestation 11 angeordnet ist und beim Herunterdrücken bzw. Loslassen des Zahnputzglases 6 einen entsprechenden elektrischen Impuls erzeugt. Dieser Impuls wird durch eine - vorzugsweise ohnehin schon vorgesehene - drahtlose Kommunikationsverbindung von der Ladestation 11 zum Zahnputzglas 6 übertragen und wird dort zur Steuerung des Displays 10 wie oben beschrieben, beispielsweise zur Signalisierung einer Benutzereingabe, ausgewertet.

Die Anordnung der Markierungselemente 20 und des Sensors 21 ist auch umgekehrt möglich, d. h. die Markierungselemente 20 sind im Boden des Zahnputzglases 6 und der Sensor 21 ist in der Oberfläche 24 der Ladestation 11 angeordnet. In diesem Fall werden auch die Signale vom Sensor 21 zum Display 10 drahtlos übertragen.

Alternativ zur Eingabe von Eingabebefehlen über das Zahnputzglas 6 ist es auch möglich, diese Eingabe über die Zahnbürste 1 vorzunehmen, wobei diese als drahtlose "Fernsteuerung" für die Anzeigevorrichtung 10 verwendet wird. Die Zahnbürste 1 wird dabei beispielsweise durch längeres Drücken des Ein-/Ausschalters 4 (etwa für drei Sekunden) in einen "Konfigurationsmodus" versetzt und später genauso wieder in den normalen "Zahnputzmodus" zurückversetzt.

Im Konfigurationsmodus haben der Ein-/Ausschalter 4 und die Tastwippe 5 nicht die üblichen Funktionen zum Ein-/Ausschalten der Zahnbürste 1 bzw. für die Wahl des Putzprogramms oder die Steuerung der Bewegungsgeschwindigkeit der Zahnbürste 1. Stattdessen erfolgt im Konfigurationsmodus die Auswahlmöglichkeit auf dem Display 10 in beide Richtungen durch mehrmaliges oder länger anhaltendes Drücken des ersten Tasters 5a bzw. des zweiten Tasters 5b auf der Tastwippe 5 (statt durch Drehen des Zahnputzglases 6). Entsprechend erfolgt das Bestätigen der Eingabe durch einmaliges oder mehrmaliges Drücken des Ein-/Ausschalters 4 (statt durch Herunterdrücken des Zahnputzglases 6).

Die Eingabebefehle werden dann über die vorhandenen Sender/Empfänger in der Zahnbürste 1 und im Zahnputzglas 6 bzw. in der Ladestation 11 übertragen.

Auf diese Weise lassen sich die vorhandenen Bedienelemente an der Zahnbürste 1 zur Konfiguration der Anzeigeeinrichtung 10 wiederverwenden und müssen nicht an der Ladestation 11 und am Zahnputzglas 6 vorgesehen werden, wodurch diese beiden Komponenten einfach und kostengünstig herzustellen sind.

Weiterhin ist es möglich, die Eingabe über Bedienelemente vorzunehmen, die am Zahnputzglas 6 vorgesehen sind. Vorzugsweise sind dies ähnliche Bedienelemente wie diejenigen, die an der Zahnbürste 1 angeordnet sind, d. h. zwei Taster zur Auswahl einer Information, beispielsweise durch das Durchlaufen einer Liste in zwei Richtungen, und ein Knopf zur Bestätigung einer Eingabe.

Es können aber auch andere Bedienelemente wie ganze Tastenfelder, beispielsweise numerische oder alphanumerische Tastenfelder, am Zahnputzglas 6 vorgesehen sein. Diese Bedienelemente sind vorzugsweise in Form von Sensortasten unter der Oberfläche des Zahnputzglases 6 angeordnet, welche beispielsweise kapazitiv arbeiten und durch das Berühren der Oberfläche des Zahnputzglases 6 betätigt werden, so dass die Bedienelemente gegen Feuchtigkeit genauso geschützt sind wie die Anzeigeeinrichtung 10 im Zahnputzglas 6.

Auch können die ganze Anzeigeeinrichtung 10 oder Teile davon als berührungsempfindlicher Bildschirm, d. h. als sogenannter "Touchscreen", ausgestaltet sein. Dadurch lassen sich viele von Mobiltelefonen, insbesondere von sogenannten "Smartphones", her bekannte Eingabeverfahren auf die Anzeigeeinrichtung 10 übertragen, insbesondere die üblichen Eingabegesten wie Tippen, Wischen oder Ziehen, insbesondere mit einem Finger oder mit mehreren Fingern gleichzeitig.

**Bezugszeichenliste**

| | | | |
|---|---|---|---|
| 1 | Elektrische Zahnbürste | 10g | Eingabeaufforderung |
| 2 | Handstück | 10h | Eingabefeld |
| 3 | Aufsteckbürste | 10i | Zeichenauswahlleiste |
| 3a | Borstenkopf | 10j | Eingabeanweisungen |
| 4 | Ein-/Ausschalter | 11 | Ladestation |
| 5 | Tastwippe | 11a | Umfassungswand der Ladestation |
| 5a | Erster Taster | 12 | Kabel |
| 5b | Zweiter Taster | 13 | Stecker |
| 6 | Zahnputzglas | 14 | Primärspule in der Ladestation |
| 7 | Hintere Wandfläche | 15 | Spulenkern der Primärspule |
| 8 | Vordere Wandfläche | 16 | Sekundärspule in der Zahnbürste |
| 9 | Boden | 17 | Spulenkern der Sekundärspule |
| 10 | Anzeigeeinrichtung | 18 | Sekundärspule im Zahnputzglas |
| 10a | Anzeige der Zahnputzdauer | 19 | Verbindungskabel |
| 10b | Anzeige des Batterieladezustands | 20 | Markierungselement |
| 10c | Anzeige des Datums und der Uhrzeit | 21 | Sensor |
| 10d | Obere Kante des Displays | 22 | Druckfeder |
| 10e | Untere Kante des Displays | 23 | Taster |
| 10f | Stoßstelle des Displays | 24 | Oberseite der Ladestation |

## Patentansprüche

1. Kombination einer elektrischen Zahnbürste (1) mit einer oder mehreren Zubehöreinrichtungen, wobei die eine oder eine der Zubehöreinrichtungen ein Zahnputzglas (6) ist, das Zahnputzglas (6) wenigstens eine Anzeigeeinrichtung (10) aufweist und die Anzeigeeinrichtung (10) zur Anzeige wenigstens einer Information eingerichtet ist, die sich auf die Zahnbürste (1) bezieht,
**dadurch gekennzeichnet, dass**
die wenigstens eine Information eine Information über den Zustand der Zahnbürste (1) oder eine Information über den aktuellen Putzvorgang ist.

2. Kombination nach Anspruch 1, **dadurch gekennzeichnet, dass** die Anzeigeeinrichtung (10) in eine Seitenwand (7, 8) und/oder in den Boden (9) des Zahnputzglases (6) integriert ist.

3. Kombination nach Anspruch 2, **dadurch gekennzeichnet, dass** die Anzeigeeinrichtung (10) in einer, insbesondere im Wesentlichen zylindrischen oder kegelstumpfförmigen, Seitenwand (7, 8) des Zahnputzglases (6) vollständig oder teilweise umlaufend angeordnet ist.

4. Kombination nach einem der vorhergehenden Ansprüche, **dadurch gekennzeichnet, dass** die auf der Anzeigeeinrichtung (10) dargestellten Informationen auf der Außenseite und/oder auf der Innenseite des Zahnputzglases (6) seitenrichtig zu erkennen sind.

5. Kombination nach einem der vorhergehenden Ansprüche, **dadurch gekennzeichnet, dass** zu den Zubehöreinrichtungen ein Zahnputzglas (6) und eine Ladestation (11) gehören, wobei die Zahnbürste (1) durch die Ladestation (11) aufladbar ist und die Zahnbürste (1) sich während des Aufladevorgangs in dem Zahnputzglas (6) befindet.

6. Kombination nach Anspruch 5, **dadurch gekennzeichnet, dass** die Anzeigeeinrichtung (10) Energie für ihren Betrieb von der Ladestation (11) bezieht.

7. Kombination nach einem der Ansprüche 5 oder 6, **dadurch gekennzeichnet, dass** das Zahnputzglas (6) mit der Ladestation (11) lösbar verbindbar ist, dass das Zahnputzglas (6) im mit der Ladestation (11) verbundenen Zustand relativ zur Ladestation (11) bewegbar, insbesondere drehbar, ist und dass das Zahnputzglas (6) und/oder die Ladestation (11) Erkennungsmittel, insbesondere wenigstens einen Sensor (21) und/oder wenigstens ein Markierungselement (20), aufweisen, die dazu eingerichtet sind, die Position und/oder die Orientierung des Zahnputzglases (6), insbesondere dessen Drehstellung, relativ zur Ladestation (11) zu erkennen.

8. Kombination nach Anspruch 7, **dadurch gekennzeichnet, dass** durch Veränderung der Position und/oder der Orientierung des Zahnputzglases (6) relativ zur Ladestation (11) und/oder durch das Herstellen und/oder durch das Lösen der Verbindung des Zahnputzglases (6) mit der Ladestation (11) Eingabewerte an die Anzeigeeinrichtung (10) übermittelt werden können.

9. Kombination nach Anspruch 8, **dadurch gekennzeichnet, dass** die Eingabewerte Steuerbefehle zur Steuerung der Zahnbürste (1) enthalten.

10. Kombination nach einem der vorhergehenden Ansprüche, **dadurch gekennzeichnet, dass** die Anzeigeeinrichtung (10) und die Zahnbürste (1) für eine drahtlose Informationsübertragung von der Zahnbürste (1) zur Anzeigeeinrichtung (10) und/oder umgekehrt eingerichtet sind.

11. Kombination nach Anspruch 10, **dadurch gekennzeichnet, dass** die Zahnbürste (1) eine Sekundärspule (16) zur induktiven Energieübertragung aufweist, dass das Zahnputzglas (6) eine Sekundärspule (18) zur induktiven Energieübertragung aufweist und dass die drahtlose Informationsübertragung über die Sekundärspule (16) der Zahnbürste (1) und über die Sekundärspule (18) des Zahnputzglases (6) erfolgt.

12. Kombination nach einem der Ansprüche 5 bis 11, **dadurch gekennzeichnet, dass** die Anzeigeeinrichtung (10) zur drahtlosen Informationsübertragung mit der Ladestation (11) und die Ladestation (11) zur drahtlosen Informationsübertragung mit der Zahnbürste (1) eingerichtet ist.

13. Kombination nach einem der Ansprüche 5 bis 12, **dadurch gekennzeichnet, dass** das Zahnputzglas (6) eine Sekundärspule (18) zur induktiven Energieübertragung aufweist, dass die Ladestation (11) eine Primärspule (14) zur induktiven Energieübertragung aufweist und dass die drahtlose Informationsübertragung wenigstens über die Sekundärspule (18) des Zahnputzglases (6) und die Primärspule (14) der Ladestation (11) erfolgt.

14. Kombination nach Anspruch 6, **dadurch gekennzeichnet, dass** das Zahnputzglas (6) eine Sekundärspule (18) zur induktiven Energieübertragung auf das Zahnputzglas (6) und zur Energieversorgung der Anzeigeeinrichtung (10) aufweist.

15. Kombination nach einem der vorhergehenden Ansprüche, **dadurch gekennzeichnet, dass** die Zahnbürste (1) eine abnehmbare Aufsteckbürste (3) aufweist und dass die Anzeigeeinrichtung (10) zur Anzeige wenigstens einer Information eingerichtet ist, die sich auf die Aufsteckbürste (3) bezieht.

## Claims

1. Combination of an electric toothbrush (1) with one or more accessory devices, wherein the one or one of the accessory devices is a toothbrush glass (6), the toothbrush glass (6) has at least one display device (10), and the display device (10) is adapted for displaying at least one piece of information relating to the toothbrush (1),
**characterised in that**
the at least one piece of information is a piece of information about the state of the toothbrush (1) or a piece of information about the current brushing session.

2. Combination according to claim 1, **characterised in that** the display device (10) is integrated into a side wall (7, 8) and/or into the bottom wall (9) of the toothbrush glass (6).

3. Combination according to claim 2, **characterised in that** the display device (10) is arranged completely or partially circumferentially in a, in particular substantially cylindrical or frustoconical, side wall (7, 8) of the toothbrush glass (6).

4. Combination according to one of the preceding claims, **characterised in that** the information represented on the display device (10) can be identified in a non-reversed way on the outer surface and/or on the inner surface of the toothbrush glass (6).

5. Combination according to one of the preceding claims, **characterised in that** a toothbrush glass (6) and a charging station (11) belong to the accessory devices, the toothbrush (1) being rechargeable by the charging station (11) and the toothbrush (1) being placed in the toothbrush glass (6) during the charging process.

6. Combination according to claim 5, **characterised in that** the display device (10) obtains energy for its operation from the charging station (11).

7. Combination according to one of claims 5 or 6, **characterised in that** the toothbrush glass (6) is detachably connected to the charging station (11), that the toothbrush glass (6) is, in the state of being connected to the charging station (11), moveable, in particular turnable, relatively to the charging station (11) and that the toothbrush glass (6) and/or the charging station (11) have detection means, in particular at least one sensor (21) and/or at least one marking element (20), which are adapted for detecting the position and/or the orientation of the toothbrush glass (6), in particular the rotational position thereof, relatively to the charging station (11).

8. Combination according to claim 7, **characterised in that** input values can be transferred to the display device (10) by changing the position and/or the orientation of the toothbrush glass (6) relatively to the charging station (11) and/or by establishing and/or by releasing the connection of the toothbrush glass (6) to the charging station (11).

9. Combination according to claim 8, **characterised in that** the input values contain control commands for controlling the toothbrush (1).

10. Combination according to one of the preceding claims, **characterised in that** the display device (10) and the toothbrush (1) are adapted for wirelessly transmitting information from the toothbrush (1) to the display device (10) and/or vice versa.

11. Combination according to claim 10, **characterised in that** the toothbrush (1) has a secondary coil (16) for inductive transmission of energy, that the toothbrush glass (6) has a secondary coil (18) for inductive transmission of energy, and that the information is wirelessly transmitted via the secondary coil (16) of the toothbrush (1) and via the secondary coil (18) of the toothbrush glass (6).

12. Combination according to one of claims 5 to 11, **characterised in that** the display device (10) is adapted for wirelessly transmitting information with the charging station (11), and the charging station (11) is adapted for wirelessly transmitting information with the toothbrush (1).

13. Combination according to one of claims 5 to 12, **characterised in that** the toothbrush glass (6) has a secondary coil (18) for inductive transmission of energy, that the charging station (11) has a primary coil (14) for inductive transmission of energy, and that the information is wirelessly transmitted at least via the secondary coil (18) of the toothbrush glass (6) and the primary coil (14) of the charging station (11).

14. Combination according to claim 6, **characterised in that** the toothbrush glass (6) has a secondary coil (18) for inductive transmission of energy to the toothbrush glass (6) and for the supply of the display device (10) with energy.

15. Combination according to one of the preceding claims, **characterised in that** the toothbrush (1) has a detachable brushhead (3) and that the display device (10) is adapted for displaying at least one piece of information relating to the brushhead (3).

## Revendications

1. Combinaison d'une brosse à dents électrique (1) à un ou plusieurs dispositifs accessoires, dans laquelle l'un des dispositifs accessoires est un verre à brosse à dents (6), le verre à brosse à dents (6) comprenant au moins un dispositif d'affichage (10) et le dispositif d'affichage (10) étant conçu pour afficher au moins une information qui concerne la brosse à dents (1),
**caractérisée en ce que**
ladite au moins une information est une information concernant un état de la brosse à dents (1) ou une information concernant une opération de brossage actuelle.

2. Combinaison selon la revendication 1, **caractérisée en ce que** le dispositif d'affichage (10) est intégré dans une paroi latérale (7, 8) et/ou dans le fond (9) du verre à brosse à dents (6).

3. Combinaison selon la revendication 2, **caractérisée en ce que** le dispositif d'affichage (10) est agencé de manière entièrement ou partiellement périphérique dans une paroi latérale (7, 8), en particulier essentiellement cylindrique ou tronconique, du verre à brosse à dents (6).

4. Combinaison selon l'une quelconque des revendications précédentes, **caractérisée en ce qu'**il est possible de reconnaître à l'endroit les informations représentées sur le dispositif d'affichage (10) sur la face extérieure et/ou sur la face intérieure du verre à brosse à dents (6).

5. Combinaison selon l'une quelconque des revendications précédentes, **caractérisée en ce qu'**un verre à brosse à dents (6) et une station de charge (11) font partie des dispositifs accessoires, la brosse à dents (1) pouvant être chargée par la station de charge (11) et la brosse à dents (1) se situant dans le verre de brosse à dents (6) pendant la procédure de charge.

6. Combinaison selon la revendication 5, **caractérisée en ce que** le dispositif d'affichage (10) reçoit de l'énergie de la station de charge (11) pour son fonctionnement.

7. Combinaison selon l'une quelconque des revendications 5 ou 6, **caractérisée en ce que** le verre à brosse à dents (6) peut être relié à la station de charge (11) de manière détachable, **en ce que** le verre à brosse à dents (6), une fois relié à la station de charge (11), peut être déplacé, en particulier amené en rotation, par rapport à la station de charge (11), et **en ce que** le verre à brosse à dents (6) et/ou la station de charge (11) comprennent des moyens de détection, en particulier au moins un capteur (21) et/ou au moins un élément de marquage (20), qui sont conçus pour détecter la position et/ou l'orientation du verre à brosse à dents (6), en particulier la position rotative de celui-ci, par rapport à la station de charge (11).

8. Combinaison selon la revendication 7, **caractérisée en ce que** des valeurs de saisie peuvent être transmises au dispositif d'affichage (10) à la suite d'une modification de la position et/ou de l'orientation du verre à brosse à dents (6) par rapport à la station de charge (11) et/ou à la suite de l'établissement et/ou à la suite de la libération de la liaison entre le verre à brosse à dents (6) et la station de charge (11).

9. Combinaison selon la revendication 8, **caractérisée en ce que** les valeurs de saisie contiennent des instructions de commande pour la commande de la brosse à dents (1).

10. Combinaison selon l'une quelconque des revendications précédentes, **caractérisée en ce que** le dispositif d'affichage (10) et la brosse à dents (1) sont conçus pour une transmission d'informations sans fil de la brosse à dents (1) au dispositif d'affichage (10) et/ou inversement.

11. Combinaison selon la revendication 10, **caractérisée en ce que** la brosse à dents (1) comprend une bobine secondaire (16) pour la transmission d'énergie par induction, **en ce que** le verre à brosse à dents (6) comprend une bobine secondaire (18) pour la transmission d'énergie par induction et **en ce que** la transmission d'informations sans fil est réalisée par l'intermédiaire de la bobine secondaire (16) de la brosse à dents (1) et par l'intermédiaire de la bobine secondaire (18) du verre à brosse à dents (6).

12. Combinaison selon l'une quelconque des revendications 5 à 11, **caractérisée en ce que** le dispositif d'affichage (10) est conçu pour la transmission d'informations sans fil avec la station de charge (11) et la station de charge (11) est conçue pour la transmission d'informations sans fil avec la brosse à dents (1).

13. Combinaison selon l'une quelconque des revendications 5 à 12, **caractérisée en ce que** le verre à brosse à dents (6) comprend une bobine secondaire (18) pour la transmission d'énergie par induction, **en ce que** la station de charge (11) comprend une bobine primaire (14) pour la transmission d'énergie par induction, et **en ce que** la transmission d'informations sans fil est réalisée au moins par l'intermédiaire de la bobine secondaire (18) du verre à brosse à dents (6) et de la bobine primaire (14) de la station de charge (11).

14. Combinaison selon la revendication 6, **caractérisée en ce que** le verre à brosse à dents (6) comprend une bobine secondaire (18) pour la transmission d'énergie par induction sur le verre à brosse à dents (6) et pour l'alimentation en énergie du dispositif d'affichage (10).

15. Combinaison selon l'une quelconque des revendications précédentes, **caractérisée en ce que** la brosse à dents (1) comprend une brosse enfichable (3) amovible et **en ce que** le dispositif d'affichage (10) est conçu pour afficher au moins une information qui concerne la brosse enfichable (3).
